**Europäisches Patentamt**

**European Patent Office**

**Office européen des brevets**

(19)

(11) **EP 1 523 006 A1**

(12) **EUROPEAN PATENT APPLICATION**
published in accordance with Art. 158(3) EPC

(43) Date of publication:
**13.04.2005 Bulletin 2005/15**

(51) Int Cl.⁷: **G11B 20/10**, G11B 20/12,
G11B 27/00, G06F 12/14,
H04L 9/00, H04L 9/32

(21) Application number: **04730694.9**

(22) Date of filing: **30.04.2004**

(86) International application number:
**PCT/JP2004/006324**

(87) International publication number:
**WO 2004/100154 (18.11.2004 Gazette 2004/47)**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **30.04.2003 JP 2003125968**

(71) Applicant: **Sony Corporation
Tokyo 141-0001 (JP)**

(72) Inventor: **ASANO, Tomoyuki
Shinagawa-ku Tokyo 1410001 (JP)**

(74) Representative: **Melzer, Wolfgang, Dipl.-Ing. et al
Patentanwälte
Mitscherlich & Partner,
Sonnenstrasse 33
80331 München (DE)**

(54) **DATA PROCESSING METHOD, PROGRAM THEREOF, DEVICE THEREOF, AND RECORDING MEDIUM**

(57) A management apparatus 12 generating a different plurality of signature data by using its own secret key and providing this as disc ID's to a disc production apparatus 14 is provided. The disc production apparatus 14 produces a plurality of disc type recording media 2 recording a plurality of said disc ID's. A reproduction apparatus 15 reads out the disc ID from a disc type recording medium 2 before playing the reproduction apparatus 15 and verifies this based on public key data of the management apparatus 12.

FIG. 2

## Description

TECHNICAL FIELD

The present invention relates to a data processing method for processing relating to identification data for identifying recording media, a program of the same, and an apparatus and recording medium of the same.

BACKGROUND ART

When using optical discs or other recording media to provide content, if the recording media are illegitimately copied, the profit of the content provider is inappropriately damaged.

In order to solve this problem, there is known a system of recording ID's for identifying individual recording media in the in recording media and for identifying illegitimately copied recording media based on the ID's.

In the above conventional system, however, there is a problem that it was not possible to verify if the ID recorded in a recording medium was tampered with or if the ID was generated by a person having a legitimate right.

DISCLOSURE OF THE INVENTION

The present invention was made in consideration with the above problem of the prior art and has as a first object thereof to provide a data processing method capable of generating such identification data in a form in which illegitimate generation and tampering of identification data are difficult, a program of the same, and an apparatus of the same.

Further, the present invention has as a second object thereof to provide a data processing method capable of suitably verifying identification data generated by the data processing method, program of the same, and apparatus of the same for achieving the first object, a program of the same, and an apparatus of the same.

Further, the present invention has as a third object thereof to provide a recording medium recording identification data generated by the data processing method, program of the same, and apparatus of the same for achieving the first object.

To attain the first object, a data processing method of a first aspect of the invention is a data processing method for generating identification data for identifying recording media, comprising a first step of using secret key data of a management side of said identification data to generate a plurality of different signature data and a second step of assigning said plurality of signature data generated at said first step as said identification data to a plurality of different recording media.

The mode of operation of the data processing method of the first aspect of the invention is as follows.

First, at said first step, it uses secret key data of the management side of said identification data to generate a plurality of different signature data.

Next, at said second step, it assigns said plurality of signature data generated at said first step as said identification data to a plurality of different recording media.

Said steps are executed by a data processing apparatus.

A program of a second aspect of the invention is a program executed by a data processing apparatus for generating identification data for identifying recording media, comprising a first routine for using secret key data of a management side of said identification data to generate a plurality of different signature data and a second routine of assigning said plurality of signature data generated by said first routine as said identification data to a plurality of different recording media.

A data processing apparatus of a third aspect of the invention is a data processing apparatus for generating identification data for identifying recording media, comprising a first means for using secret key data of a management side of said identification data to generate a plurality of different signature data and a second means for assigning said plurality of signature data generated at said first means as said identification data to a plurality of different recording media.

The mode of operation of the data processing apparatus of the third aspect of the invention is as follows.

First, the first means uses secret key data of the management side of said identification data to generate a plurality of different signature data.

Next, the second means assigns said plurality of signature data generated by said first means as said identification data to a different plurality of recording media.

A data processing method of a fourth aspect of the invention is a data processing method for verifying legitimacy of identification data assigned to recording media for identifying the recording media, comprising a step of using public key data of the management side of said identification data to verify the legitimacy of said identification data.

The step is executed by a data processing apparatus.

A program of a fifth aspect of the invention is a program executed by a data processing apparatus for verifying legitimacy of identification data for identifying recording media assigned to the recording media, comprising a routine for using public key data of a management side of said identification data to verify the legitimacy of said identification data.

A data processing apparatus of a sixth aspect of the invention is a data processing apparatus for verifying the legitimacy of identification data for identifying recording media assigned to said recording media, comprising a means for using public key data of a management side of said identification data to verify the legitimacy of said identification data.

A data processing method of a seventh aspect of the invention is a data processing method for generating identification data for identifying recording media, comprising a first step of using secret key data and data S of a management side of said identification data to generate a plurality of different signature data able to decode said data S based on public key data of the management side and a second step of generating identification data including signature data and said data S for each of said plurality of signature data generated at said first step and assigning said plurality of identification data to the different plurality of recording media.

The mode of operation of the data processing method of the seventh aspect of the invention is as follows.

First, at the first step, it uses secret key data and data S of a management side of identification data to generate a plurality of different signature data able to decode said data S based on public key data on the management side.

Next, at the second step, it generates identification data including the signature data and the data S for each of said plurality of signature data generated at said first step and assigns the plurality of identification data to the different plurality of recording media.

A program of an eighth aspect of the invention is a program executed by a data processing apparatus for generating identification data for identifying recording media, comprising a first routine for using secret key data and data S of a management side of said identification data to generate a plurality of different signature data able to decode the data S based on said public key data of the management side and a second routine for generating identification data including signature data and said data S for each of said plurality of signature data generated by said first routine and assigning said plurality of identification data to the different plurality of recording media.

A data processing apparatus of a ninth aspect of the invention, there is provided a data processing apparatus for generating identification data for identifying recording media, comprising a first means for using secret key data and data S of a management side of said identification data to generate a plurality of different signature data able to decode data S based on said public key data of the management side and a second means for generating identification data including signature data and the data S for each of said plurality of signature data generated by said first means and assigning said plurality of identification data to the different plurality of recording media.

The mode of operation of the data processing apparatus of the ninth aspect of the invention is as follows.

First, the first means uses the secret key data and data S of the management side of identification data to generate a plurality of different signature data able to decode said data S based on the public key data of said management side.

Next, the second means generates the identification data including the signature data and data S for each of said plurality of signature data generated by said first means and assigns a plurality of said identification data to the different plurality of recording media.

A data processing method of a 10th aspect of the invention is a data processing method for verifying the legitimacy of identification data for identifying recording media assigned to recording media, comprising a first step of using public key data of a management side of said identification data to generate first data from signature data in said identification data and comparing the first data and second data in said identification data to verify the legitimacy of said identification data and a second step of decoding encryption data read out from said recording media by using said second data in said identification data when it is verified at said first step that said identification data is legitimate.

The mode of operation of the data processing method of the 10th aspect of the invention is as follows.

First, at the first step, it uses public key data of a management side of said identification data to generate first data from signature data in said identification data and compares the first data and the second data in said identification data to verify the legitimacy of said identification data.

Next, at the second step, it decodes the encryption data read out from said recording media by using said second data in said identification data when it is verified that said identification data is legitimate.

The above steps are executed by a data processing apparatus.

A program of an 11th aspect of the invention is a program executed by a data processing apparatus for verifying the legitimacy of identification data for identifying recording media assigned to the recording media, comprising a first routine for using public key data of a management side of said identification data to generate first data from signature data in said identification data and comparing the first data and second data in said identification data to verify the legitimacy of said identification data and a second routine for decoding encryption data read out from said recording media by using said second data in said identification data when it is verified by said first routine that said identification data is legitimate.

A data processing apparatus of a 12th aspect of the invention, there is provided a data processing apparatus for verifying the legitimacy of the identification data for identifying the related recording media assigned to the recording media, comprising a first means for using public key data of a management side of said identification data to generate first data from signature data in said identification data and comparing the first data and second data in said identification data to verify the legitimacy of said identification data and a second means for using said second data in said identification data to decode encryption data read out from said recording media when it is verified by said first means that said identification data is legitimate.

The mode of operation of the data processing apparatus of the 12th aspect of the invention is as follows.

First, the first means uses public key data of a management side of said identification data to generate first data from the signature data in said identification data.

Next, said first means compares said first data and second data in said identification data to verify the legitimacy of said identification data.

Next, the second means decodes the encryption data read out from said recording media by using said second data in said identification data when it is verified by said first means that said identification data is legitimate.

A data processing method of a 13th aspect of the invention is a data processing method for generating identification data ID(w) individually assigned to W number of recording media STM(w) where the opened data M is a product of two prime numbers, T is a product of W(W≥2) number of different prime numbers p(w), w is an integer of 1≦w≦W, and K is a generator of a cyclic group Z*M, comprising a first step of calculating (KT/p(w) modM) and a second step of assigning the identification data ID(w) including (KT/p(w) modM) calculated at said first step to the recording media STM(w).

The mode of operation of the data processing method of the 13th invention is as follows.

First, at the first step, it calculates (KT/p(w) modM).

Next, at the second step, it assigns p(w) and the identification data ID(w) including (KT/p(w) modM) calculated at said first step to the recording media STM(w).

The above steps are executed by a data processing apparatus.

A program of a 14th aspect of the invention is a program executed by a data processing apparatus for generating identification data ID(w) individually assigned to W number of recording media STM(w) where opened data M is a product of two prime numbers, T is a product of W(W≥2) number of different prime numbers p(w), w is an integer of 1≦w≦W, and K is a generator of a cyclic group Z*M, comprising a first routine for calculating (KT/p(w) modM) and a second routine for assigning identification data ID(w) including (KT/p(w) modM) calculated by said first routine to the recording media STM(w).

A data processing apparatus of a 15th aspect of the invention is a data processing apparatus for generating identification data ID(w) assigned to W number of recording media STM(w) where opened data M is a product of two prime numbers, T is a product of W(W≥2) number of different prime numbers p(w), w is an integer of 1≦w≦W, and K is a generator of a cyclic group Z*M, comprising a first means for calculating (KT/p(w) modM) and a second means for assigning identification data ID(w) including (KT/p(w) modM) calculated by said first means to the recording media STM(w).

The mode of operation of the data processing apparatus of the 15th invention is as follows.

First, the first means calculates (KT/p(w) modM).

Next, the second means assigns p(w) and the identification data ID(w) including (KT/p(w) modM) calculated by said first means to the recording media STM (w).

A data processing method of a 16th aspect of the invention is a data processing method for verifying a legitimacy of identification data for identifying recording media assigned to the recording media, comprising a first step of verifying whether or not data p included in said identification data is a prime number; a second step of using data IDKey and said data p included in said identification data and opened data M to calculate (IDKeyp modM) when it is verified at said first step that said data p is a prime number; and a third step of using a decoding key obtained based on (IDKeyp modM) calculated at said second step to decode encryption data recorded at said recording media.

The mode of operation of the data processing method of the 16th aspect of the invention is as follows.

First, at the first step, it verifies whether or not data p included in said identification data is a prime number.

Next, at the second step, it uses the data IDKey and said data p included in said identification data and opened data M to calculate (IDKeyp modM) when it is verified at said first step that said data p is a prime number.

Next, at the third step, it uses the decoding key obtained based on (IDKeyp modM) calculated at said second step to decode the encryption data recorded in said recording media.

The above steps are executed by a data processing apparatus.

A program of a 17th aspect of the invention is a program executed by a data processing apparatus for verifying a legitimacy of identification data for identifying recording media assigned to the recording media, comprising a first routine for verifying whether or not data p included in said identification data is a prime number; a second routine for using data IDKey and said data p included in said identification data and opened data M to calculate (IDKeyp modM) when it is verified by said first routine that said data p is a prime number; and a third routine for using a decoding key obtained based on (IDKeyp modM) calculated by said second routine to decode the encryption data recorded in said recording media.

A processing apparatus of an 18th aspect of the invention is a processing apparatus for verifying a legitimacy of identification data for identifying recording media assigned to recording media, comprising a first means for verifying whether or not the data $\underline{p}$ included in said identification data is a prime number; a second means for using the data IDKey and said data $\underline{p}$ included in said identification data and opened data M to calculate (IDKeyp modM) when it is verified by said first means that said data $\underline{p}$ is a prime number; and a third means for using a decoding key obtained based on (IDKeyp modM) calculated by said second means to decode the encryption data recorded in said recording media.

The mode of operation of the data processing apparatus of the 18th aspect of the invention is as follows.

First, the first means verifies whether or not the data $\underline{p}$ included in said identification data is a prime number.

Next, the second means uses the data IDKey and said data $\underline{p}$ included in said identification data and opened data M to calculate (IDKeyp modM) when it is verified by said first means that said data $\underline{p}$ is a prime number.

Next, the third means uses the decoding key obtained based on (IDKeyp modM) calculated by said second means to decode the encryption data recorded in said recording media.

A data processing method of a 19th aspect of the invention is a data processing method for generating identification data ID(w) assigned to each of W number of recording media STM(w) when data which is the product of the prime numbers q1 and q2 and is opened is M, w is an integer of $1 \leqq w \leqq W$, W(W$\geqq$2) number of different data are e(w), e(w) is a generator of a cyclic group Z*M, e(w) and $\lambda$(M) are primes with respect to each other, and $\lambda$(M) is the least common multiple of (q1-1) and (q2-1), comprising a first step of using the data S of the generator of a cyclic group Z*M to calculate (Sd(w) modM), the data d(w) of the reciprocal of e(w) when $\lambda$(M) is normal, and said data M and a second step of assigning identification data ID(w) including the (Sd(w) modM) calculated at said first step to the recording media STM(w).

The mode of operation of the data processing method of the 19th aspect of the invention is as follows.

First, at the first step, it uses the data S of the generator of a cyclic group Z*M, the data d(w) of the reciprocal of e(w) when $\lambda$(M) is the normal, and said data M to calculate (Sd(w) modM).

Next, at the second step, it assigns the identification data ID(w) including said e(w) and (Sd(w) modM) calculated at said first step to the recording media STM(w).

The above steps are executed by a data processing apparatus.

A program of a 20th aspect of the invention is a program executed by a data processing apparatus for generating identification data ID(w) assigned to each of W number of recording media STM(w) when data which is a product of prime numbers q1 and q2 and is opened is M, w is an integer of $1 \leqq w \leqq W$, W(W$\geqq$2) number of different data are e(w), e(w) is a generator of a cyclic group Z*M, e(w) and $\lambda$(M) are primes with respect to each other, and $\lambda$(M) is the least common multiple of (q1-1) and (q2-1), comprising a first routine for using the data S of the generator of a cyclic group Z*M, the data d(w) of a reciprocal of e(w) when $\lambda$(M) is normal, and said data M to calculate (Sd(w) modM) and a second routine for assigning identification data ID(w) including (Sd(w) modM) calculated by said first routine to the recording media STM(w).

A data processing apparatus of a 21st aspect of the invention is a data processing apparatus for generating identification data ID(w) assigned to each of W number of recording media STM(w) when data which is a product of prime numbers q1 and q2 and opened is M, w is an integer of $1 \leqq w \leqq W$, W(W$\geqq$2) number of different data are e(w), e(w) is a generator of a cyclic group Z*M, e(w) and $\lambda$(M) are primes with respect to each other, and $\lambda$(M) is the least common multiple of (q1-1) and (q2-1), comprising a first means for using the data S of the generator of a cyclic group Z*M, the data d(w) of a reciprocal of e(w) when $\lambda$(M) is normal, and said data M to calculate (Sd(w) modM) and a second means for assigning identification data ID(w) including (Sd(w) modM) calculated by said first means to the recording media STM(w).

The mode of operation of the data processing apparatus of the 21st aspect of the invention is as follows.

First, the first means uses the data S of a generator of a cyclic group Z*M, the data d(w) of a reciprocal of e(w) when $\lambda$(M) is the normal, and said data M to calculate (Sd(w) modM).

Next, the second means assigns the identification data ID(w) including said e(w) and (Sd(w) modM) calculated by said first means to the recording media STM(w).

A data processing method of a 22nd aspect of the invention is a data processing method for verifying a legitimacy of identification data for identifying recording media assigned to the recording media, comprising a first step of using data $\underline{e}$ and data I included in said identification data and opened data M to calculate (Ie modM) and a second step of using (Ie modM) calculated at said first step as the decoding key to decode the encryption data recorded in said recording media.

The mode of operation of the data processing method of the 22nd aspect of the invention is as follows.

First, at the first step, it uses the data $\underline{e}$ and the data I included in said identification data and opened data M to calculate (Ie modM).

Next, at the second step, it uses (Ie modM) calculated at said first step as the decoding key to decode the encryption data recorded in said recording media.

A program of a 23rd aspect of the invention is a program executed by a data processing apparatus for verifying the legitimacy of identification data for identifying recording media assigned to the recording media, comprising a first routine for using data $\underline{e}$ and data I included in said identification data and opened data M to calculate (Ie modM) and a second routine for using (Ie modM) calculated by said first routine as the decoding key to decode the encryption data recorded in said recording media.

A data processing apparatus of a 24th aspect of the invention is a data processing apparatus for verifying a legitimacy of identification data for identifying recording media assigned to the recording media, comprising a first means for using data $\underline{e}$ and data I included in said identification data and opened data M to calculate (Ie modM) and a second means for using (Ie modM) calculated by said first means as the decoding key to decode encryption data recorded in said recording media.

The mode of operation of the data processing apparatus of the 24th aspect of the invention is as follows.

First, the first means uses the data $\underline{e}$ and the data I included in said identification data and opened data M to calculate (Ie modM).

Next, the second means uses (Ie modM) calculated by said first means as the decoding key to decode the encryption data recorded in said recording media.

A recording medium of a 25th aspect of the invention is a recording medium for recording data, recording identification data generated by using secret key data of a management side of said recording medium, verified in legitimacy based on the public key data of said management side, and identifying the recording medium.

A recording medium of a 26th aspect of the invention is a recording media for recording data, recording identification data including signature data used for generating first data by using public key data of a management side of said recording medium and said second data used for verifying a legitimacy of the identification data by comparing the same with said first data and identifying said recording medium.

A recording medium of a 27th aspect of the invention is a recording medium for recording encryption data, recording identification data including data $\underline{p}$ of a prime number and data IDKey used for calculating (IDKeyp modM) of content key data used for decoding said encryption data together with said data $\underline{p}$ and the opened data M and identifying said recording medium.

A recording medium of a 28th aspect of the invention is a recording medium for recording encryption data, recording identification data including data $\underline{e}$ used for calculating (Ie modM) of content key data used for decoding said encryption data together with opened data M and data I and identifying said recording medium.

BRIEF DESCRIPTION OF THE DRAWINGS

FIG. 1 is a view for explaining data recorded in a disc type recording medium according to an embodiment of the present invention.
FIG. 2 is a view of an overall configuration of a content provision system according to an embodiment of the present invention.
FIG. 3 is a view of the configuration of a management apparatus shown in FIG. 2.
FIG. 4 is a flow chart for explaining processing for generation of a disc ID by the management apparatus shown in FIG. 3.
FIG. 5 is a view of the configuration of a disc production apparatus shown in FIG. 2.
FIG. 6 is a flow chart for explaining a disc production procedure by the disc production apparatus shown in FIG. 5.
FIG. 7 is a view for explaining the data structure of a revocation list DIRL recorded in the disc type recording medium shown in FIG. 1.
FIG. 8 is a view of an example of MAC value generation processing.
FIG. 9 is a view of a tree structure for explaining various types of keys, encryption processing of data, and distribution processing.
FIG. 10 is a view of an example of an enabling key block (EKB) used for the distribution of the various types of keys and data.
FIG. 11 is a view showing an example of distribution and an example of processing for decoding using the enabling key block (EKB) of the content key.
FIG. 12 is a view showing an example of the format of the enabling key block (EKB).
FIG. 13 is a view for explaining the structure of a tag of the enabling key block (EKB).
FIG. 14 is a view for explaining category division in the tree structure.
FIG. 15 is a view for explaining category division in the tree structure.
FIG. 16 is a view of the configuration of a reproduction apparatus shown in FIG. 2.
FIG. 17 is a flow chart for explaining the processing for reproduction of the reproduction apparatus shown in FIG. 16.
FIG. 18 is a flow chart for explaining the verification processing of the disc ID of step ST32 shown in FIG. 17.
FIG. 19 is a flow chart for explaining the processing for reproduction of step ST38 shown in FIG. 17.
FIG. 20 is a flow chart for explaining the generation processing of the disc ID of a management apparatus in a second embodiment of the present invention.

FIG. 21 is a flow chart for explaining the verification processing of the disc ID of step ST32 shown in FIG. 17 by the reproduction apparatus in the second embodiment of the present invention.

FIG. 22 is a flow chart for explaining the processing for reproduction of step ST38 shown in FIG. 17 by the reproduction apparatus in the second embodiment of the present invention.

FIG. 23 is a flow chart for explaining the generation processing of the disc ID of the management apparatus in a third embodiment of the present invention.

FIG. 24 is a flow chart for explaining the verification processing of the disc ID of step ST32 shown in FIG. 17 by a reproduction apparatus in the third embodiment of the present invention.

FIG. 25 is a flow chart for explaining the processing for reproduction of step ST38 shown in FIG. 17 by a reproduction apparatus in the third embodiment of the present invention.

FIG. 26 is a flow chart for explaining the generation processing of the disc ID of a management apparatus in a fourth embodiment of the present invention.

FIG. 27 is a flow chart for explaining the processing for reproduction by a reproduction apparatus in the fourth embodiment of the present invention.

BEST MODE FOR WORKING THE INVENTION

Hereinafter, an explanation will be given of preferred embodiments of the present invention by referring to the drawings.

<First Embodiment>

The present embodiment is an embodiment corresponding to the first to the sixth and the 25th aspects of the invention.

[Disc Type Recording Medium 2]

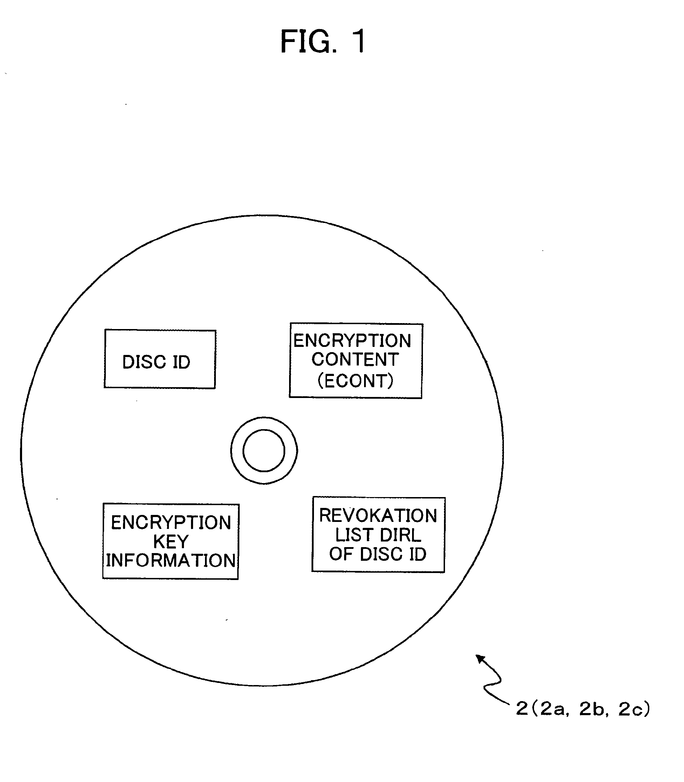

FIG. 1 is a diagram for explaining data recorded in a disc type recording medium 2 (the recording medium of the 25th aspect of the invention) according to the present embodiment of the present invention.

The disc type recording medium 2 is a recording medium of a CD (compact disc), DVD (digital versatile disk), MD (Mini Disk), or other disc type.

The disc type recording medium 2 corresponds to the recording medium of the 25th aspect of the invention. Note that the recording medium of the present invention may be a semiconductor recording device such as flash memory or other recording medium as well.

As shown in FIG. 1, the disc type recording medium 2 records the disc ID, encryption content data ECONT, encryption key information EKB, and revocation list DIRL of the disc ID.

The disc ID is identification data for identifying the disc type recording medium 2 and is stored in the disc type recording medium 2 so that erasing and rewriting are difficult.

The disc ID corresponds to the identification data of the present invention. The method of generation of the disc ID will be explained later.

The disc ID corresponds to the identification data of the present invention. The method of generation of the disc ID will be explained.

Note that, in the embodiment explained below, a disc-like medium is shown as an example of the content storage information recording media, so the identification data thereof will be explained as a disc ID.

Identification data corresponding to the disc ID is also set in a case where various types of information recording media such as flash memories are utilized.

The encrypted content data ECONT is encrypted content data. The content key data for decoding the encrypted content data ECONT is acquired by the processing for decoding etc. of the enabling key block (EKB) of the encryption key information stored in the disc type recording medium 2 based on device node key data (DNK) provided to the reproduction apparatus as a legitimate content using apparatus by for example a hierarchical type key data distribution structure.

Details of the provision of the device node key data DNK by the hierarchical type key data distribution configuration and the key acquisition processing by the processing for decoding the enabling key block EKB based on the device node key data DNK will be explained later.

Further, the disc ID revocation list (DIRL) is data obtained by extracting and listing up disc ID's copied to illegitimate CD-R's together with content when discs recognized as having been illegitimately copied, for example, CD-R' storing illegitimate copy content, are found in the market. The generation and management of the revocation list DIRL and the provision of the list information to the disc producer are executed by a specific reliable central authority (CA).

[System Configuration]

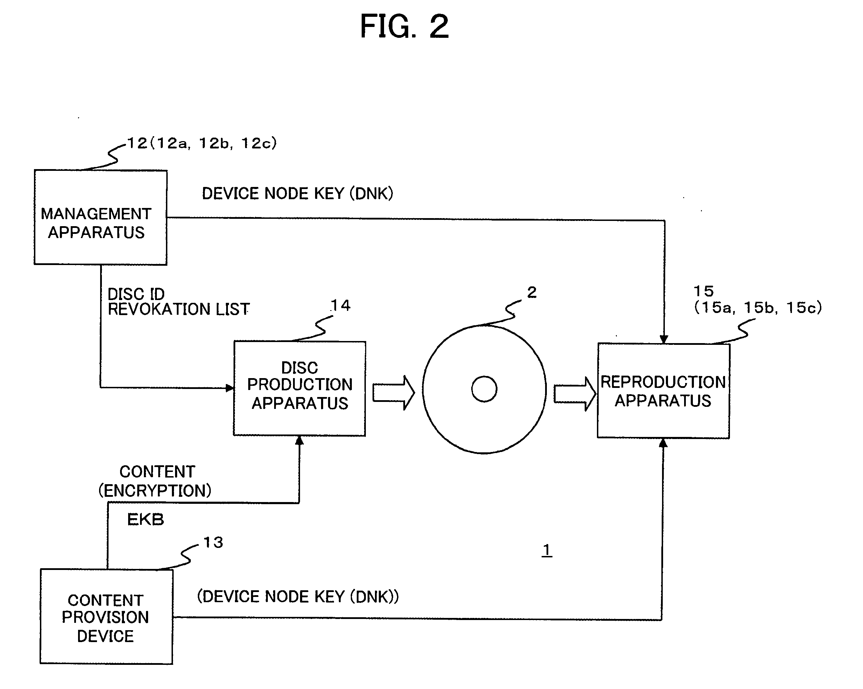

FIG. 2 is a view of the configuration of a content provision system 1 according to a first embodiment of the present invention.

As shown in FIG. 2, the content provision system 1 has a management apparatus 12 used by the central authority CA, a content provision device 13 used by the content provider, a disc production apparatus 14 used by the disc producer, and a reproduction apparatus 15 used by the user.

Here, the management apparatus 12 corresponds to the data processing apparatuses of the second and third aspects of the invention.

Further, the reproduction apparatus 15 corresponds to the data processing apparatuses of the fifth and sixth aspects of the invention.

Note that, in the present embodiment, the reproduction apparatus 15 is illustrated, but so far as the legitimacy of the disc ID recorded in the disc type recording medium 2 is verified and the processing is carried out based on the result thereof, it is also possible to use for example a data processing apparatus for recording or editing content data read out from a disc type recording medium 2 other than the reproduction apparatus 15.

The management apparatus 12 generates disc ID's and revocation list DIRL and provides them to the disc production apparatus 14.

Further, the content provision device 13 provides the encrypted content data ECONT and the enabling key block EKB to the disc production apparatus 14.

The disc production apparatus 14 produces disc type recording media 2 recording the disc ID's and revocation list DIRL received from the management apparatus and the encrypted content data ECONT and the enabling key block EKB received from the content provision device 13.

The user for example purchases a disc type recording medium 2 and sets it in the reproduction apparatus 15.

The reproduction apparatus 15 verifies that the disc ID recorded in the disc type recording medium 2 is legitimate, confirms that the disc ID does not exist in the revocation list DIRL, and decodes and continuously reproduces the encrypted content data ECONT conditional on suitable content key data being acquired from the enabling key block EKB based on its own device node key data DNK.

Below, a detailed explanation will be given of the apparatuses configuring the content provision system 1 shown in FIG. 2.

[Management Apparatus 12]

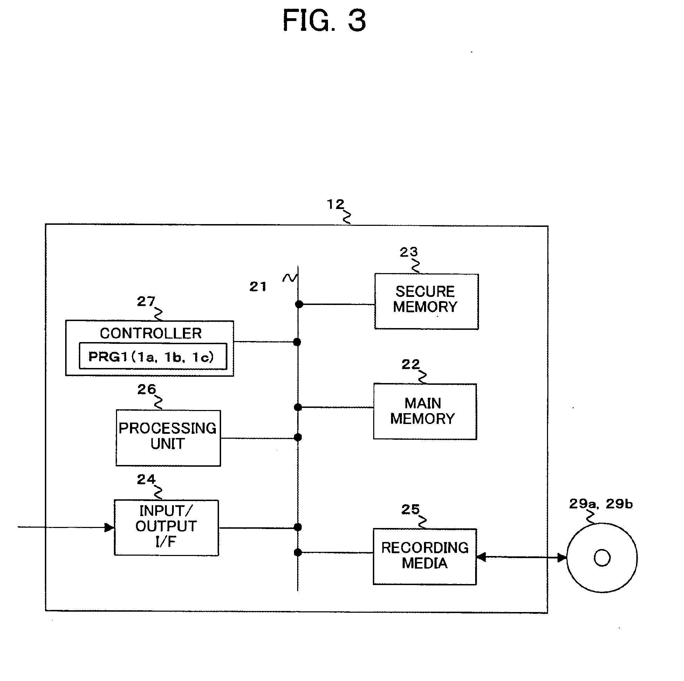

FIG. 3 is a view of the configuration of the management apparatus 12 shown in FIG. 2.

As shown in FIG. 3, the management apparatus 12 has for example a main memory 22, a secure memory 23, an input/output interface (I/F) 24, a recording medium interface (I/F) 25, a processing unit 26, and a controller 27 all connected via a bus 21.

The main memory 22 stores data having a low security level among the various data used for the processing of the processing unit 26 and the controller 27.

The secure memory 23 stores data having a high security level among the various data used for the processing of the processing unit 26 and the controller 27.

The secure memory 23 stores for example the secret key data of the central authority CA used for the generation of the disc ID's.

The input/output interface 24 is connected to for example a not illustrated operating means or a network and receives as input the various data used by the management apparatus 12.

The recording medium interface 25 writes the disc ID's and the revocation list DIRL generated under the control of the controller 27 into the recording media 29a. The recording media 29a are provided to the content provision device 13

Further, the recording medium interface 25 writes the device node key data DNK generated under the control of the controller 27 into the recording media 29b.

The recording media 29b are provided to the reproduction apparatuses 15 or the producer of the reproduction apparatuses 15.

The processing unit 26 generates the signature data under the control of the controller 27 and generates the disc ID's based on this.

Further, the processing unit 26 generates the revocation list DIRL.

The controller 27 executes a program PRG1 (program of the second aspect of the invention) to comprehensively control the processing of the management apparatus 12.

The functions (processing) of the management apparatus 12 in the present embodiment are defined in accordance with the execution of the program PRG1 by the controller 27.

All or part of the functions (processing) of the management apparatus 12 can be defined by the program PRG1 and can be realized by hardware as well.

Below, an explanation will be given of the operation for generation of the disc ID's by the management apparatus 12 shown in FIG. 3.

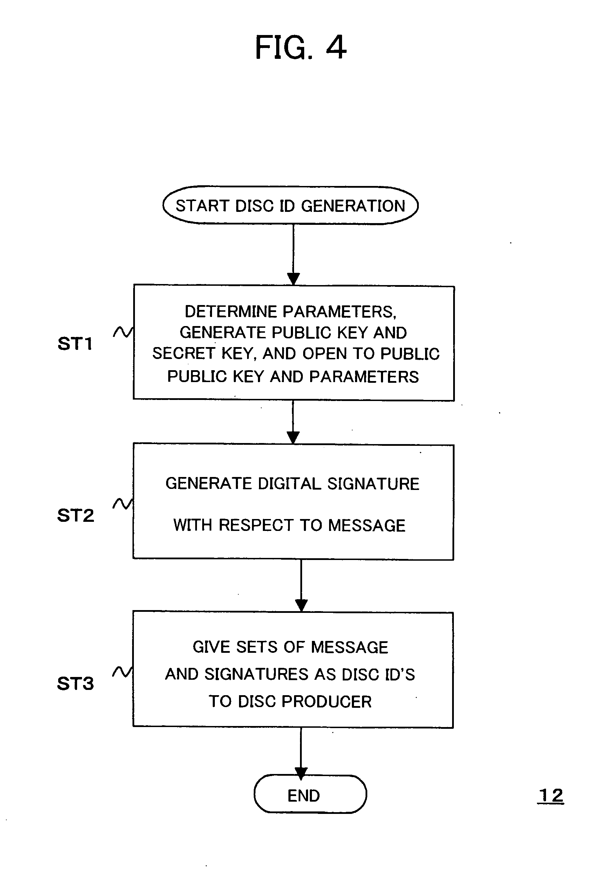

FIG. 4 is a flow chart for explaining the operation for generation of the disc ID's by the management apparatus 12 shown in FIG. 3.

In FIG. 4, step ST2 corresponds to the first step of the first aspect of the invention, and step ST3 corresponds to the second step of the first aspect of the invention.

Further, by executing step ST2 by the controller 27, the first means of the third aspect of the invention is realized, and by executing step ST3, the second means of the third aspect of the invention is realized.

Step ST1:

The controller 27 of the management apparatus 12 determines the public key data (public key data of the first aspect of the invention) and the secret key data (secret key data of the first to the third aspects of the invention) of the central authority CA as the key data for the digital signatures and parameters for generating and verifying the signatures.

The controller 27 opens to the public the public key data and the parameters.

The controller 27 for example transmits the public key data and the parameters from an output interface 24 onto the network to open the same to the public.

The processing of step ST1 need be carried out only once at the time of the setup of the management apparatus 12.

Step ST2:

The management apparatus 12 receives as input the title of the content (for example a movie) and the number W (W≥2) of the produced disc type recording media 2 from the content provider and stores this in the main memory 22.

The processing unit 26 uses any message M (the second data of the first aspect of the invention), a random number r(w), and secret key data of the central authority CA to generate W number of digital signature data SIG(w) (signature data of the first to third aspects of the invention).

The signature data SIG(w) is generated in a format enabling tampering and legitimacy to be confirmed using the public key data corresponding to the secret key data of the central authority CA.

Here, w = 1, 2,..., W, and r(w) are individual random numbers.

Note that the processing unit 26 can generate the signature data SIG(w) based on individual W number of messages M(w) (not always have to be individual random numbers) as well.

The processing unit 26 uses DSA, the U.S. standard signature method in the FIPSPUB 186-2, the method enabling a signer to use any random number at the time of generation of the signature, ECDSA, the elliptical curve encryption version thereof, etc. The DSA (digital signature algorithm) is described in for example Okamoto, Ryumei and Yamamoto, Hiroshi, *Contemporary Encryption,* Sangyo Tosho, 1997, pp. 179-180. ECDSA is described in detail in specifications obtainable from http:grouper.ieee.org/groups/1363/tradPK/index.html.

Step ST3:

The controller 27 uses the message M or M(w) determined at step ST1 and the signature data SIG(w) generated at step ST2 to generate a set of (M, SIG(w)) or a set of (M(w), SIG(w)) as the w-th disc ID(w)'s and provides the same together with the title to the disc producer in the secure state.

Specifically, for example, it records the disc ID (w)'s in the recording media 29a shown in FIG. 3 and provides them to the disc producer.

Further, the management apparatus 12 generates a revocation list DIRL indicating the disc ID's of the information recording media to be revoked and provides it to the disc producer.

[Disc Production Apparatus 14]

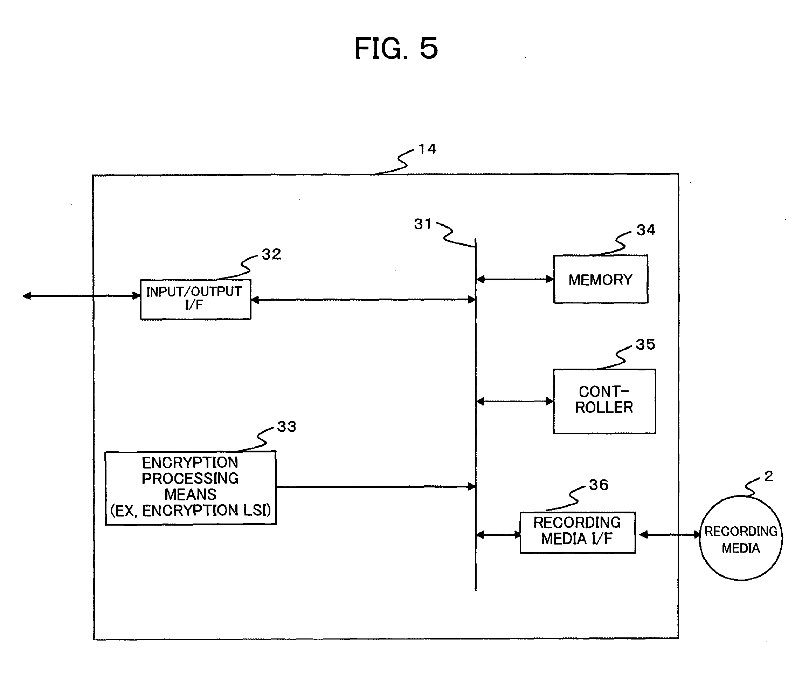

FIG. 5 is a view of the configuration of the disc production apparatus 14 shown in FIG. 1.

As shown in FIG. 5, the disc production apparatus 14 has for example an input/output interface 32, an encryption processing unit 33, a memory 34, a controller 35, and a recording medium interface 36 connected via a bus 31.

The input/output interface 32 receives a digital signal supplied from the outside and outputs this to the bus 31.

The input/output interface 32 receives as input for example the encrypted content data ECONT and enabling key block EKB from the content provision device 13.

Further, the input/output interface 32 receives as input data such as the disc ID(w)'s and revocation list DIRL from the management apparatus 12 via the recording media 19a etc.

Note that the input/output interface 32 receives a number of the disc ID(w)'s corresponding to the number of the discs to be produced from the management apparatus 12.

Further, the input/output interface 32 receives as input the encrypted content data ECONT and the enabling key block EKB from the content provision device 13 via the recording media etc.

The encryption processing unit 33 is configured by for example 1 chip of an LSI (large scale integrated circuit) and is configured to encrypt or decode the digital signal of the content supplied via the bus 31 and output it onto the bus 31.

Note that the encryption processing unit 33 is not limited to a one-chip LSI. It is also possible to realize the encryption processing unit 33 by a configuration combining various types of software or hardware.

The memory 34 stores the encrypted content data ECONT and the enabling key block EKB received from the content provision device 13 and the disc ID's and revocation list DIRL received from the management apparatus 12.

The controller 35 comprehensively controls the processing of the disc production apparatus 14.

The recording medium interface 36 produces the disc type recording media 2 shown in FIG. 1 in which various data is written under the control of the controller 35.

Below, an explanation will be given of an example of the operation of the disc production apparatus 14 shown in FIG. 5.

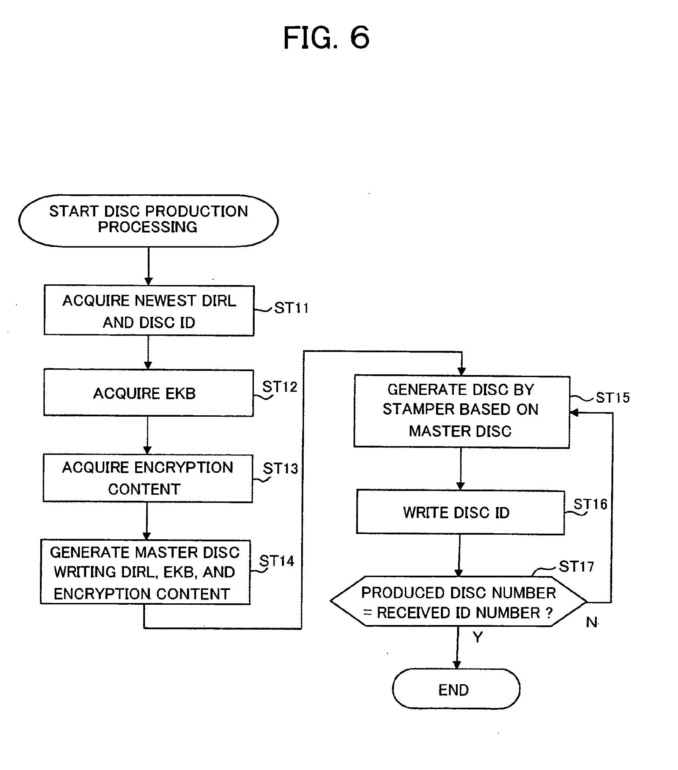

FIG. 6 is a flow chart for explaining an example of the operation of the disc production apparatus 14 shown in FIG. 5.

Step ST11:

The disc production apparatus 14 receives as input W number of disc ID(w)'s and the revocation list DIRL from the management apparatus 12 via the recording media 19a and writes the same into the memory 34 via the input/output interface 32.

Step ST12:

The disc production apparatus 14 receives as input the enabling key block EKB from the content provision device 13 and writes the same into the memory 34 via the input/output interface 32.

Step ST13:

The disc production apparatus 14 receives as input the encrypted content data ECONT from the content provision device 13 and writes the same into the memory 34 via the input/output interface 32.

Step ST14:

The controller 35 of the disc production apparatus 14 reads out the revocation list DIRL, the enabling key block EKB, and the encrypted content data ECONT from the memory 34 and writes these data into an information recording medium (disc) to produce a master disc.

Step ST15:

The controller 35 produces discs as copies by stamping by a stamper based on the master disc produced at step ST14.

Step ST16:

The controller 35 writes the disc ID(w)'s read out from the memory 34 into the discs produced in step ST15 to produce the disc type recording media 2.

Step ST17:

The controller 35 decides whether or not W number of disc type recording media 2 have been produced, ends the processing when deciding that they have been produced, while returns to the processing of step ST15 when they are not produced.
In this way, the disc production apparatus 14 writes different disc ID (w)'s into produced discs in accordance with the number W of the disc type recording media 2 received from the management apparatus 12.
Accordingly, this means that different disc ID (w)'s are set in the disc type recording media 2s circulated in the market. When a plurality of disc type recording media 2 recording the same disc ID(w)'s are found, it is decided that illegitimate copies have been made, the central authority CA executes updating for writing the disc ID(w)'s into the revocation list DIRL, the updated list is provided to the disc producer, and the list is stored in normal discs.
When the user purchasing a disc type recording medium 2 sets the disc type recording medium 2 in the production apparatus 15 and executes the content reproduction processing, the version is compared with the revocation list DIRL stored in the memory in the reproduction apparatus 15, and the updated list is stored in the memory. Accordingly, the list stored in the memory of the reproduction apparatus 15 of the user is updated at any time.
Below, an explanation will be given of the revocation list DIRL produced by the management apparatus 12.

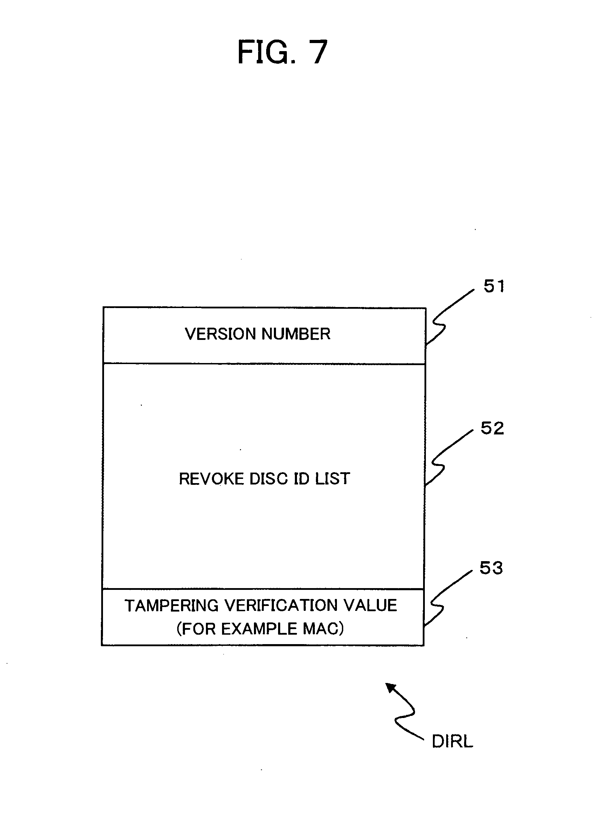

FIG. 7 is a diagram for explaining the revocation list DIRL shown in FIG. 1.
As shown in FIG. 7, the revocation list DIRL includes a version number 51 incremented in value in accordance with the time when the revocation list DIRL is prepared, a revoked disc ID list 52 listing disc ID(w)'s of the disc type recording media 2 to be invalidated (revoked), and an identifier as a tampering verification value 53 with respect to the version number 51 and the revoked disc ID list 52.
The tampering verification value 53 is data applied for determining whether or not the data in question, in this case the version number 51 and the revoked disc ID list 52, have been tampered with. The digital signature using the public key encryption technique and the message authentication code (MAC) using the common key encryption technique are applied.
When using a digital signature using the public key encryption technique as the tampering verification value 53, the signature verification key (public key) of a reliable authority, for example, the central authority CA, is acquired by the player and the signature formed by using the signature generation key (secret key) of the central authority CA is verified by the signature verification key (public key) acquired by each player, by which it is determined whether or not the version number 51 and the revoked disc ID list 52 have been tampered with.

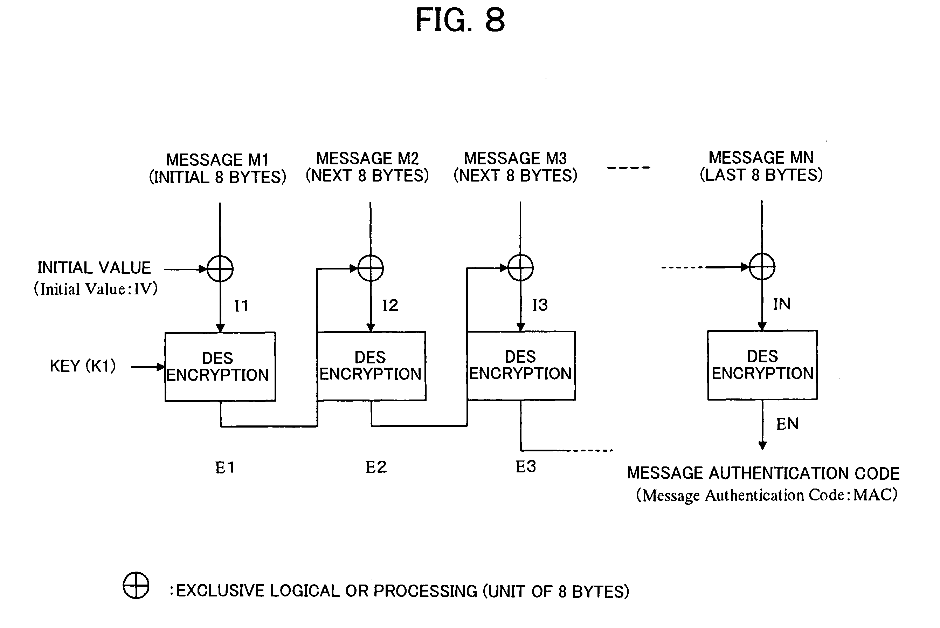

FIG. 8 is a view for explaining the MAC generation and the verification processing when using the message authentication code MAC as the tampering verification value 53.
The message authentication code MAC is generated as data for tampering verification of data. Various aspects are possible as the MAC generation processing and the verification processing. The explanation will be given of an example of the generation of the MAC value using the DES encryption processing structure based on FIG. 8 as an example.
As shown in FIG. 8, the message in question, in this case, the version number 51 and the revoked disc ID list 52 shown in FIG. 7, are divided into units of 8 bytes (hereinafter the divided messages defined as M1, M2,..., MN). First, the exclusive logical OR of the initial value (IV) and M1 is obtained (the result is defined as 11).

Next, I1 is input to the DES encryption unit and encrypted by using a key (hereinafter referred to as K1) (the output is defined as E1).

After this, the exclusive logical OR of E1 and M2 is obtained, and an output I2 thereof is input to the DES encryption unit and encrypted by using the key K1 (output E2). Below, this is repeated and the encryption processing is applied to all messages. The finally output EN becomes the message authentication code MAC.

The MAC value becomes a different value when the generator data thereof is changed, the MAC generated based on the data (message) to be verified and the recorded MAC are compared, and when they coincide, it is proved that the data (message) to be verified has not been changed and tampered with.

As the key K1 in MAC generation, it is possible to apply the key (root key data) obtained by the processing for decoding the enabling key block (EKB) based on the device node key data DNK by the hierarchical type key data distribution structure. Further, as the initial value IV, it is possible to use a value determined in advance.

[Hierarchical Type Key Distribution Tree Structure]

Below, an explanation will be given of the key provision processing according to the hierarchical type key distribution tree structure of an embodiment of the broadcast encryption system and the reproduction apparatus management configuration as a player.

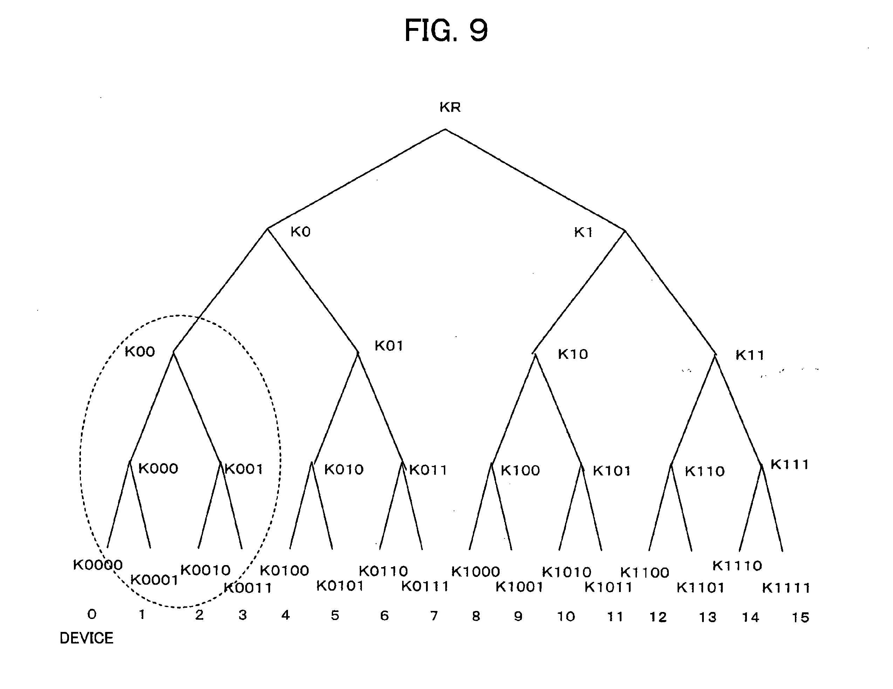

Numbers 0 to 15 shown at the lowermost stage of FIG. 9 are user devices for utilizing the content. In the present embodiment, a user device corresponds to the reproduction apparatus 15 shown in FIG. 2.

The leaves having the hierarchical tree structure shown in FIG. 4 correspond to the devices.

The devices 0 to 15 store key data sets (device node key data DNK) comprised of the keys (node key data) assigned to nodes from their leaves to the root in the hierarchical tree structure shown in FIG. 9 and the leaf key data of the leaves in the memory at the time of the production or the time of shipping or after that.

K0000 to K1111 shown at the lowermost stage of FIG. 9 are leaf key data assigned to the devices 0 to 15. The key data KR to K111 described from the KR (root key data) of the uppermost stage to the second node from the lowermost stage are defined as the node key data.

In the tree structure shown in FIG. 9, for example the device 0 has the leaf key data K0000 and the node key data K000, K00, K0, and KR. The device 5 has K0101, K010, K01, K0 and KR. The device 15 has K1111, K111, K11, K1, and KR. Note that the tree of FIG. 9 describes only 16 devices 0 to 15 and the tree structure is shown as a balanced horizontally synchronous structure having a 4-stage configuration, but it is possible to configure more devices in the tree and provide different stage-number configurations at parts of the tree. Further, the devices included in the tree structure of FIG. 9 include various types of devices using a variety of recording media, for example, DVDs, CDs, MDs, flash memories, etc. built in the devices or able to be loaded into the devices.

Further, various application services can coexist. The content or hierarchical tree structure of the key distribution structure shown in FIG. 9 is applied to the coexisting configuration of such different devices and different applications.

In a system in which these variety of devices and applications coexist, the parts surrounded by for example the dotted lines of FIG. 9, that is, the devices 0, 1, 2, and 3, are set as one group using the same recording media.

For example, for the devices included in the group surrounded by the dotted lines, processing is performed to encrypt common content and provide it from the provider to the network or stored in CDs or other information recording media, transmit the content key data used common to the devices, or encrypt and output payment data of the content fee from the devices to the provider or a settlement authority.

The entity for transferring data with a device such as a content server, a license server, or shop server can perform processing for transmitting data together to the parts surrounded by the dotted lines of FIG. 9, that is, the devices 0, 1, 2, and 3, as one group. There are a plurality of such groups in the tree of FIG. 9.

Note that the node key data and the leaf key data may be comprehensively managed by a management system having a certain key management center authority and may be managed for each group by the provider for transferring a variety of data with the group or a settlement authority or other message data distributing means. The update processing of these node key data and leaf key data is executed in the case of for example leakage of the key data. This update processing can be executed by a management system, provider, settlement authority, etc. having the key management center authority.

In this tree structure, as apparent from FIG. 9, four devices 0, 1, 2, and 3 included in one group hold device node key data DNK including common key data K00, K0, and KR as the device node key data DNK.

By utilizing this node key data sharing structure, it becomes possible to provide for example common key data to only the devices 0, 1, 2, and 3. For example, the commonly held node key data K00 becomes the held key data common to the devices 0, 1, 2, and 3.

Further, if the value Enc (K00, Knew) obtained by encrypting new key data Knew by the node key data K00 is distributed to the devices 0, 1, 2, and 3 via the network or stored in recording media, it becomes possible for only the devices 0, 1, 2, and 3 use the common node key data K00 held in the devices to decrypt the encryption Enc (K00, Knew) and obtain the new key data Knew. Note that Enc (Ka, Kb) indicates the data obtained by encrypting Kb by Ka.

Further, when it is discovered that the keys K0011, K001, K00, K0, Kr held by the device 3 are analyzed by an attacker (hacker) and exposed at a certain time t, in order to protect the data transferred with the system (group of the devices 0, 1, 2, 3) after that, it is necessary to disconnect the device 3 from the system.

For this purpose, it is necessary to update the node key data K001, K00, K0, KR to new keys K(t)001, K(t)00, K(t)0, K(t)R and transmit the updated key data to the devices 0, 1, and 2. Here, K(t)aaa indicates the updated key data of the generation t of the key Kaaa.

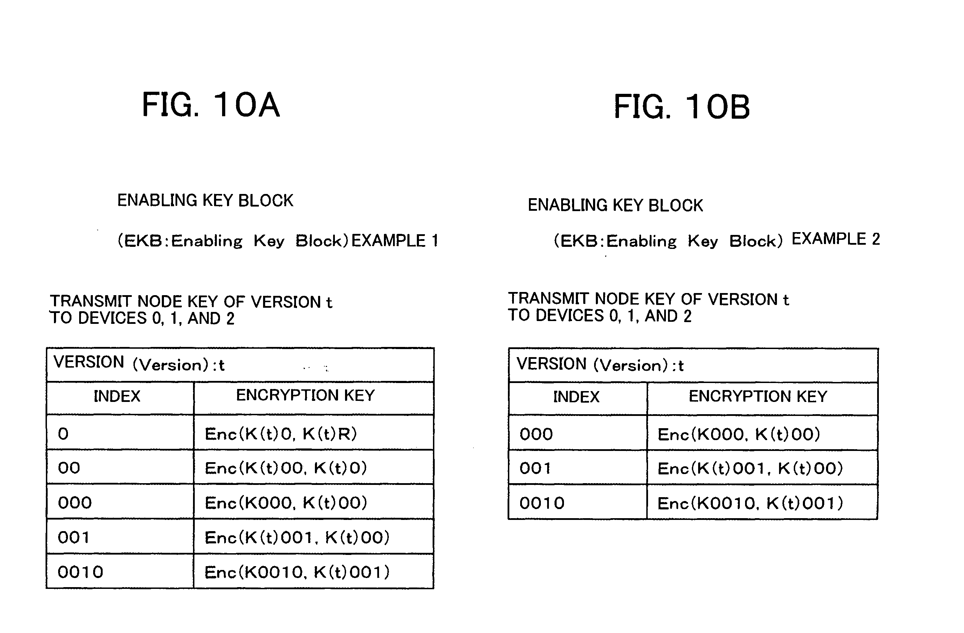

The distribution processing of the updated key data will be explained next. The key data is updated by for example supplying a table comprised of the enabling key block EKB shown in FIG. 10(A) to the devices 0, 1, and 2 via for example the network or stored in the recording media.

Note that the enabling key block EKB is comprised of encrypted key data for distributing newly updated key data to devices corresponding to leaves comprising the tree structure shown in FIG. 9. The enabling key block EKB is sometimes also referred to as a key renewal block (KRB).

The enabling key block EKB shown in FIG. 10 (A) is comprised as block data having a data structure that can be updated by only devices needing update of the node key data.

The example of FIG. 10 shows the block data formed for the purpose of distributing the updated node key data of the generation t in the devices 0, 1, and 2 in the tree structure shown in FIG. 9.

As apparent from FIG. 9, the device 0 and the device 1 need K(t)00, K(t)0, and K(t)R as the updated node key data, while the device 2 needs K(t)001, K(t) 00, K(t)0, and K(t)R as the updated node key data.

As indicated by EKB of FIG. 10(A), a plurality of encrypted key data are included in the EKB. The encrypted key data of the lowermost stage is Enc (K0010, K(t)001). This is the updated node key data K(t)001 encrypted by the leaf key data K0010 held by the device 2. The device 2 can decode this encrypted key data by the leaf key data held by itself to obtain K(t)001.

Further, it becomes possible to use K(t)001 obtained by the decoding to decode the encrypted key data Enc (K(t)001, K(t)00) in the second stage from the bottom of FIG. 10(A) and obtain the updated node key data k(t)00.

Below, sequentially, the encrypted key data Enc (K(t)00, K(t)0) of the second stage from the top of FIG. 10(A) are decoded and the updated node key data K(t)0 and the encrypted key data Enc (K(t)0, K(t)R) of the first stage from the top of FIG. 10(A) are decoded to obtain K(t)R. On the other hand, in the device K0000.K0001, the node key data K000 is not included in the target to be updated. K(t)00, K(t)0, and K(t)R are necessary as the updated node key data.

The device K0000.K0001 decodes the encrypted key data Enc (K000, K(t)00) of the third stage from the top of FIG. 10(A) to acquire K(t)00, decodes the encrypted key data Enc (K(t)00, K(t) 0) of the second stage from the top of FIG. 10(A), decodes the updated node key data K(t)0 and the encrypted key data Enc (K (t)0, K(t)R) of the first stage from the top of FIG. 10(A), and decodes the encrypted key data Enc (K(t) 0, K(t)R) of the first stage from the top of FIG. 10(A) to obtain K (t)R. In this way, the devices 0, 1, and 2 can obtain the updated key K(t)R.

Note that the indexes of FIG. 10(A) indicate absolute addresses of the node key data and leaf key data used as the decoding key data.

When update of the node key data K(t)0, K(t) R of the uppermost stage of the tree structure shown in FIG. 9 is unnecessary and update processing of only the node key data K00 is necessary, it is possible to use the enabling key block EKB of FIG. 10(B) to distribute the updated node key data K(t)00 to the devices 0, 1, and 2.

EKB shown in FIG. 10(B) can be utilized when distributing new content key data shared in for example a specific group.

As a specific example, assume that the devices 0, 1, 2, and 3 in the group indicated by the dotted lines in FIG. 9 use certain recording media, and new common content key data K(t)con is necessary.

At this time, the data Enc (K(t)00, K(t)con) obtained by encrypting the new common updated content key data K(t)con by using K(t)00 updated from the common node key data K00 of the devices 0, 1,2, and 3 is distributed together with EKB shown in FIG. 10(B). By this distribution, the distribution of data which is not decoded in devices of other groups such as the device 4 becomes possible.

Namely, when the devices 0, 1, and 2 decode the encrypted text by using K(t)00 obtained by processing the EKB, it becomes possible to obtain the key data at the time t, for example, the content key data K(t)con applied to the encryption and decoding of the content.

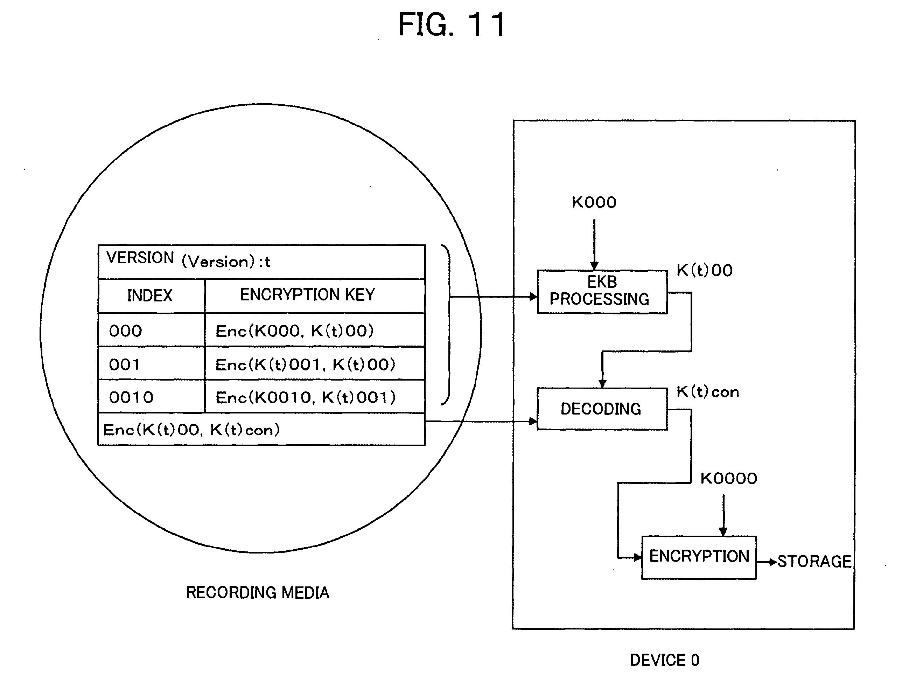

FIG. 11 shows an example of the processing for acquiring the key data at the time t, for example, the content key data K(t)con applied to the encryption and decoding of the content by the processing of EKB.

Assume that EKB stores the data Enc (K(t)00, K(t)con) obtained by encrypting the content key data K (t)con by using K(t)00 and the data shown in FIG. 10(B). Here, the example of the processing of the device 0 is shown.

As shown in FIG. 11, the device 0 generates the node key data K(t)00 by the EKB processing the same as that explained above by using the EKB of the generation stored in the recording media t and the node key data K000 stored by itself in advance.

Further, it decodes the encrypted data Enc (K (t)00, K(t)con) by using the decoded updated node key data K(t)00 to acquire the updated content key data K(t)con. Further, the device may store data by encrypting the same by the leaf key data K0000 held by itself for use later.

Further, as another example, there is also a case a device is obtained in which the update of the node key data of the tree structure is unnecessary and only the content key data K(t)con at the time t is necessary. In this case, the following method can be employed.

Now assume that it is desired to send the content key data K(t)con to only the devices 0, 1, and 2 in the same way as the example of FIG. 11. At this time, EKB becomes:

Version: t
Index encrypted key data
000 Enc(K000, K(t)con)
0010 Enc(K0010, K(t)con)

The devices 0 and 1 can obtain the content key data by decoding one encrypted text in the above EKB by using K000. Further, the device 2 can obtain the same by using K0010. By doing this, the method of not updating the node key data, but giving the content key data to the required device can be made more efficient (that is, the number of encrypted texts included in EKB is decreased to make the size of EKB smaller and, at the same time, the number of times of the encryption at the management center and the processing for decoding in the device can be reduced).

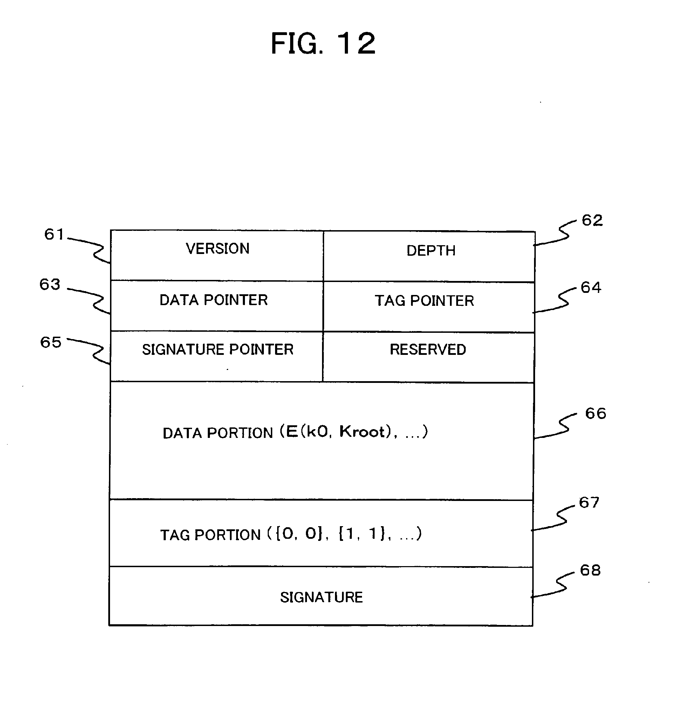

FIG. 12 shows an example of the format of the enabling key block EKB. The version 61 is the identifier indicating the version of the enabling key block EKB. Note that the version has the function of identifying the newest EKB and the function indicating the correspondence with the content. The depth indicates the number of classes of the hierarchical tree with respect to the device receiving distribution of the enabling key block EKB. A data pointer 63 is a pointer indicating the position of the data portion in the enabling key block EKB, a tag pointer 64 is a pointer indicating the position of the tag portion, and a signature pointer 65 is a pointer indicating the position of the signature.

The data portion 66 stores the data obtained by encrypting for example the node key data to be updated. For example, it stores encrypted key data etc. concerning the updated node key data as shown in FIG. 5.

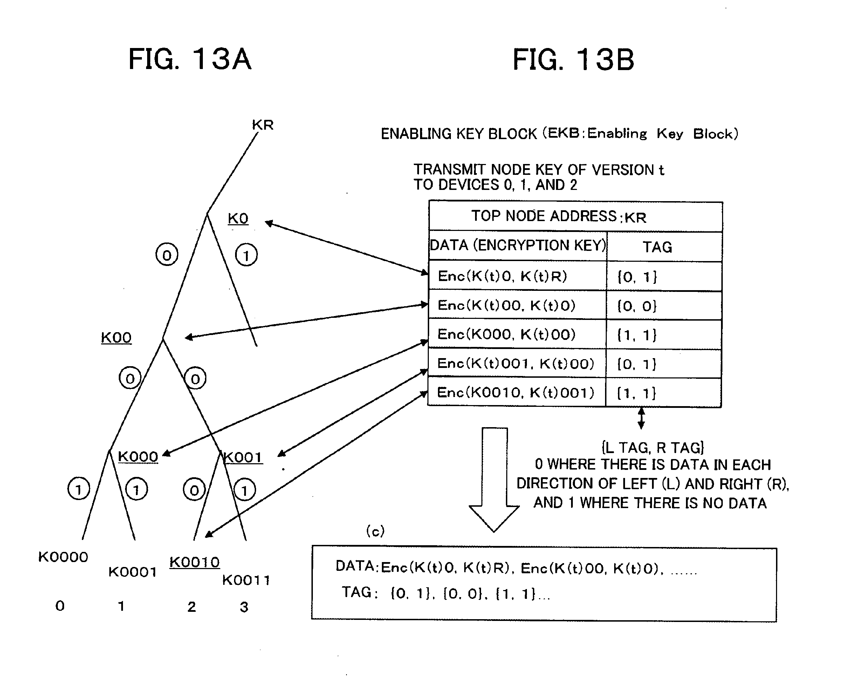

The tag portion 67 is a tag indicating the positional relationships of the encrypted node key data and leaf key data stored in the data portion. The rule for imparting this tag will be explained by using FIG. 13.

FIG. 13 shows an example of transmitting the enabling key block EKB explained in FIG. 10(A) previously as data.

The data at this time becomes as shown in table (b) of FIG. 13. The address of the top node included in the encrypted key data at this time will be referred to as the "top node address". In this case, the updated key data K(t)R of the root key data is included, so the top node address becomes KR.

At this time, for example the data Enc (K(t)0, K(t)R) of the uppermost stage is located at the position indicated in the hierarchical tree shown in (a) of FIG. 13. Here, the next data is Enc (K(t)00, K(t)0) located at a position on the bottom left of the previous data on the tree. When there is data, the tag is 0, while when there is no data, 1 is set as the tag. The tag is set as {left(L) tag, right (R) tag}. Since there is data at the left of the data Enc (K(t)0, K(t)R) of the uppermost stage, L tag=0, while since there is no data at the right, R tag=1. Below, tags are set at all data, whereby the data sequence and tag sequence shown in FIG. 13(C) are comprised.

The tags are set so as to indicate at which positions of the tree structure the data Enc (Kxxx, Kyyy) are located. The key data Enc (Kxxx, Kyyy)... stored in the data portion are just the listed data of the encrypted key data, therefore the position of encrypted key data on the tree stored as the data can be discriminated by the tags. It is also possible to use the node indexes linked with the encrypted data as in the configuration explained by the previous FIG. 10 without using the above tags and form the data structure as for example:

0: Enc (K(t)0, K(t)root)
00: Enc (K(t)00, K(t) 0)
000: Enc (K((t)000, K(T)00),

..., but when employing a structure using such indexes, data becomes redundant and the amount of data increases, so this is not preferred in distribution etc. via a network.

Contrary to this, by using the above tags as index data indicating the key data positions, it becomes possible to discriminate the key data positions with small amounts of data.

Returning to FIG. 12, a further explanation will be given of the EKB format. The signature 68 is an electronic signature executed by a management system having for example key management center authority issuing an enabling key block EKB, a content server, a license server, or a shop server. The device receiving the EKB confirms the enabling key block EKB issued by the legitimate enabling key block EKB issued by the signature verification.

An explanation will be given below of the configuration for executing efficient key data update processing, encrypted key data distribution, and data distribution by classifying the hierarchical tree structure defining the node key data etc. for each category of device.

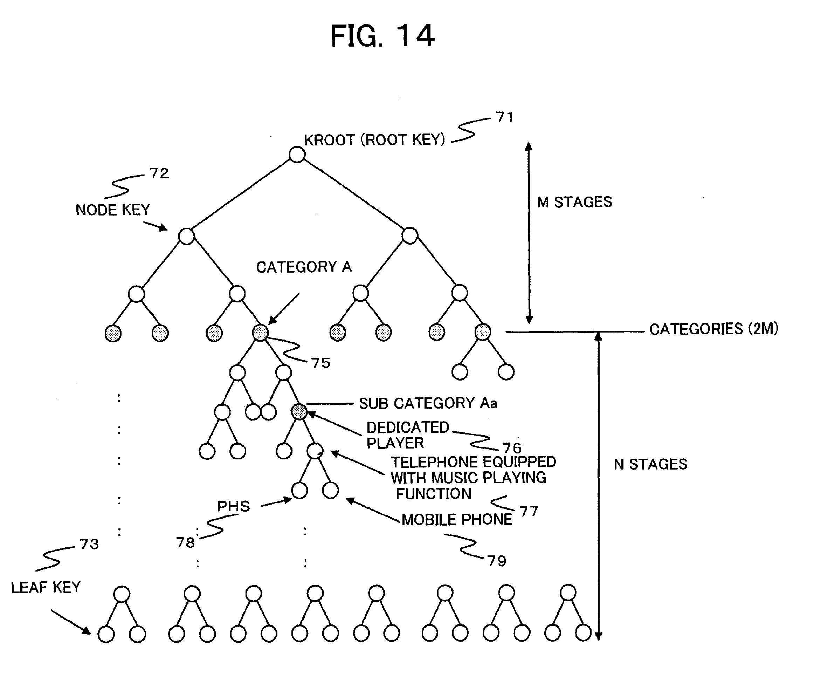

FIG. 14 is a view for explaining an example of the classification of the categories of the hierarchical tree structure.

In FIG. 14, root key data Kroot7 is set at the uppermost stage of the hierarchical tree structure, node key data 72 is set at the following intermediate stage, and leaf key data 73 is set at the lowermost stage. Each device holds individual leaf key data, a series of node key data from the leaf key data to the root key data, and the root key data.

Here, as an example, a certain node of the M-th stage from the uppermost stage is set as a category node 74. Namely, each of the nodes of the M-th stage is used as a device setting node of a specific category. Using one node of the M-th stage as the vertex, the nodes and leaves of the M+1-th stage and following stages are defined as the nodes and leaves for the devices included in that category.

For example, a category A is set in one node 75 of the M-th stage of FIG. 14. Nodes and leaves continuing from this node are classified as the category A and are set as dedicated nodes or leaves of the category A including a variety of devices. Namely, the node 75 and the following nodes are defined as a set of nodes and leaves relating to devices classified as the category A.

Further, a stage below the stage M by the amount of a few stages can be set as a sub-category node 76.

For example, as shown in the diagram, among the nodes lower than the category A node 75 by two stages, the node of a "dedicated player" is set as a sub-category Aa node included in the category A.

Further, below the node 76 of the dedicated player of the sub category Aa node, a node 77 of a telephone equipped with a music playing function included in the category of the dedicated players is set. Further below this, a "PHS" node 78 included in the category of telephones equipped with music playing functions and a "mobile phone" node 79 can be set.

Further, categories and sub-categories can be set in any of the units of the type of device, manufacturer, content provider, and node uniquely managed by a settlement authority etc., that is, units of processing, units of jurisdiction, or units of provided services. For example, when one category node is set as the vertex node dedicated to a game system XYZ sold by a game system manufacturer, it becomes possible to store and sell the node key data and leaf key data of the following stages under the vertex node in the game system XYZ to be sold by the maker, then distribute the encrypted content data or distribute or update various types of key data by generating an enabling key block EKB comprised of node key data and leaf key data under the vertex node key data and distribute only data which can be utilized to devices under the vertex node.

Further, when defining a node managed by the content provider as the category node, it is possible to set devices utilizing CD's, MD's, DVD's, or other information recording media storing content provided by the content provider or net distribution content as the nodes below the category node and provide the node key data and leaf key data at the lower stages from the vertex node to the devices.

In this way, by employing a configuration using one node as a vertex and setting the following nodes as nodes relating to the category or sub-category defined by the vertex node, it becomes possible for the maker, content provider, etc. managing one vertex node of the category stage or sub-category stage to uniquely generate a enabling key block EKB using that node as a vertex and distribute the same to devices belonging to the following nodes of the vertex node and to update key data with absolutely no effect upon the devices belonging to nodes of other categories not belonging to the vertex node.

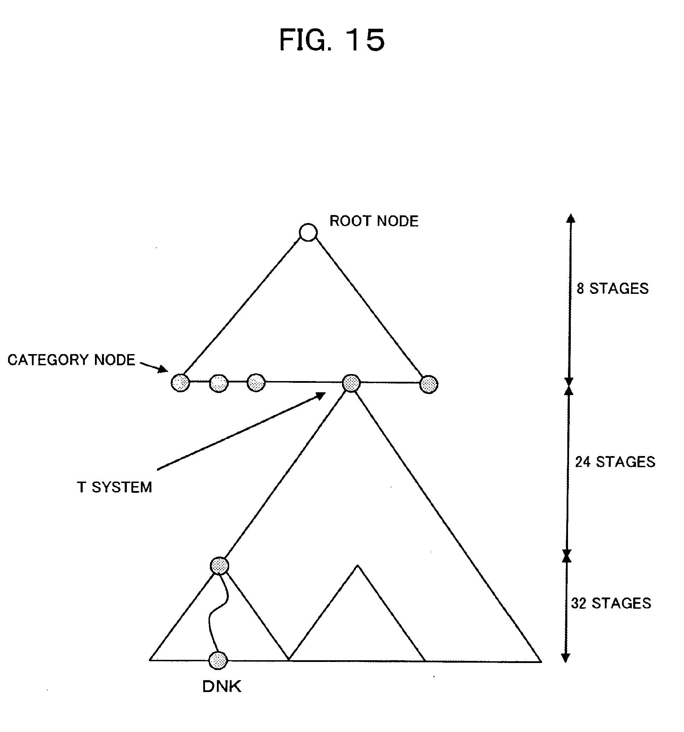

For example, as shown in FIG. 15, the key data is managed by a system of a tree structure.

In the example of FIG. 15, nodes of 8+24+32 stages are given a tree structure, and categories are linked with nodes of eight stages below the root node. The "category" here means a category of a device using a semiconductor memory, for example, a flash memory, and a category of a device receiving a digital broadcast.

Then, the present system (referred to as the "T-system") corresponds to one node among these category nodes as a system managing the license.

Namely, the key data corresponding to the nodes of the classes of 24 stages below the node of this T-system are applied to the shop server, the license server, or other service provider serving as a management entity or the service provided by the service provider.

In the case of this example, by this, 224 (about 16 mega) service providers or services can be defined. Further, by the classes of the 32 stages of the lowest side, 232 (about 4 giga) users (or user devices) can be defined.

The key data corresponding to the nodes on the paths from nodes of the 32 stages of the lowermost stage to the node of the T-system compose DNK. The ID's corresponding to the leaves of the lowermost stage are defined as the leaf ID's.

For example, content key data obtained by encrypting content is encrypted by the updated root key data KR', while the updated node key data of a higher class is encrypted by using the updated node key data of the lower class immediately next to that and arranged in the EKB. The updated node key data of one stage above the terminal end in the EKB is encrypted by the node key data or leaf key data of the terminal end of the EKB and arranged in the EKB.

The user device decodes the updated node key data of a higher class next to that described in the EKB distributed together with the content data by using any key data of the DNK described in the service data and decodes the updated node key data of the further higher class described in the EKB by using the key data obtained by decoding. By sequentially performing above processings, the user device can obtain the updated root key data KR'.

As explained above, by the classification of categories of the tree, a configuration defining one node as the vertex and setting the following nodes as nodes of the category or sub-category defined by the vertex node becomes possible, and a configuration enabling a maker, service provider, etc. managing one vertex node of the category stage or sub-category stage to uniquely generate an enabling key block EKB having the node as the vertex and distributing the same to devices belonging to the following nodes of the vertex node is realized.

[Reproduction Apparatus 15]

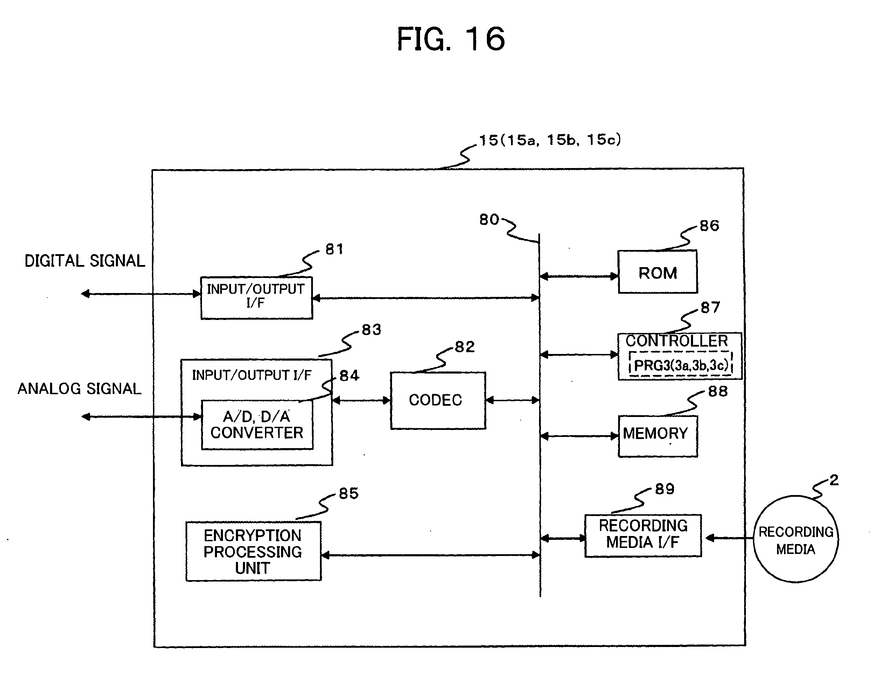

FIG. 16 is a view of the configuration of the reproduction apparatus 15 shown in FIG. 2.

As shown in FIG. 16, the reproduction apparatus 15 has for example an input/output interface 81, a codec 82 for generating and decoding various types of encoded data such as data of the MPEG (Moving Picture Experts Group), an input/output interface 83 provided with A/D-D/A converter 84, an encryption processing unit 85, a ROM (read only memory) 86, a controller 87, a memory 88, and a recording medium interface 89 for accessing a disc type recording medium 2 connected to each other by a bus 80.

The input/output interface 81 receives a digital signal supplied from the outside such as a network and outputs the same onto the bus 80 and, at the same time, receives a digital signal on the bus 80 and outputs the same to the outside.

The codec 82 decodes for example MPEG encoded data supplied via the bus 80 and outputs the same to the input/output interface 83 and, at the same time, encodes the digital signal supplied from the input/output interface 83 and outputs the same onto the bus 80.

The input/output interface 83 has a built-in converter 84.

The input/output interface 83 receives the analog signal supplied from the outside and performs A/D (analog/digital) conversion at the converter 84 to thereby output the same as the digital signal to the codec 82 and, at the same time, performs D/A (digital/analog) conversion at the converter 84 for the digital signal from the codec 82 to thereby output the same as the analog signal to the outside.

The encryption processing unit 85 is configured by for example one chip of an LIS and is configured to encrypt or decode the digital signal of for example content supplied via the bus 80 and output the same onto the bus 80.

Note that the encryption processing unit 85 is not limited to a one-chip LSI and may also be realized by a configuration combining various types of software or hardware.

The ROM 86 stores the leaf key data as the device key data inherent for each reproduction apparatus or inherent for each group of a plurality of reproduction apparatuses and the node key data as the device key data common to a plurality of reproduction apparatuses or a plurality of groups.

The controller 87 comprehensively controls the processing of the reproduction apparatus 15 by executing the program PRG3 (the program of the fifth aspect of the invention) stored in the memory 88.

Namely, the functions (processing) of the reproduction apparatus 15 are defined by the program PRG3. Note that it is also possible to realize all or part of the functions of the reproduction apparatus 15 by hardware.

The memory 88 stores the above revocation list DIRL from the disc type recording media 2 in a secure reading state.

For example, preferably this is encrypted based on the ID set in the reproduction apparatus 15 and stored in the memory so as to store it as data holding tamper resistance. In this way, the revocation list DIRL is stored so that it is not erased from the outside, the content is not tampered with, and replacement with an old version of the list is not easy.

The recording medium interface 89 is used for accessing the disc type recording media 2.

Below, an explanation will be given of an example of the operation of the reproduction apparatus 15 shown in FIG. 16.

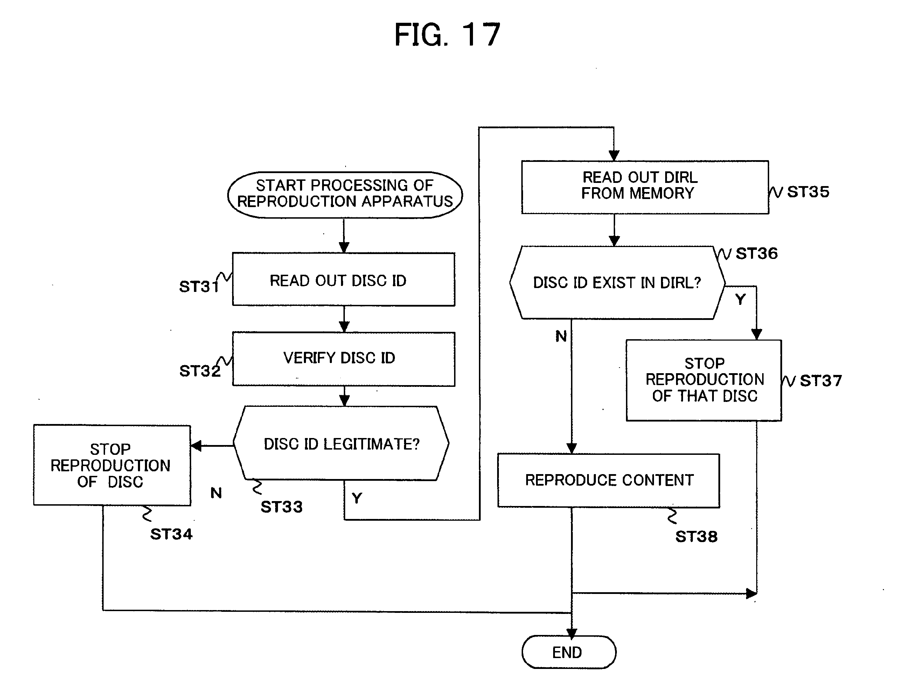

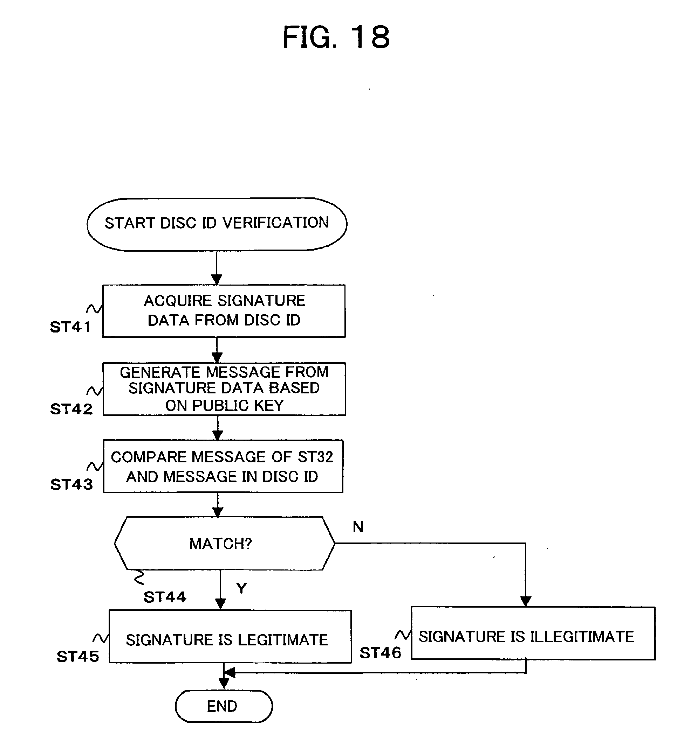

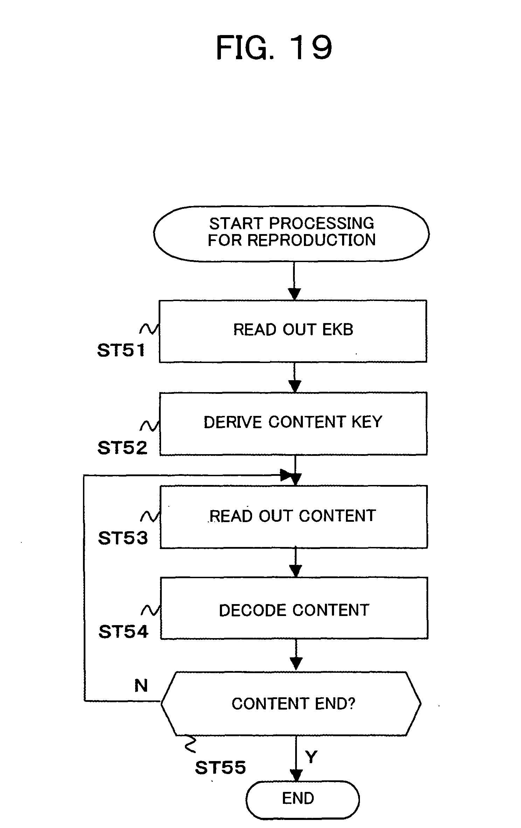

FIG. 17 is a flow chart for explaining an example of the overall operation of the reproduction apparatus 15 shown in FIG. 17, FIG. 18 is a flow chart for explaining the verification processing of a disc ID of step ST32 shown in FIG. 17, and FIG. 19 is a flow chart for explaining the reproduction of content of step ST38 shown in FIG. 17.

Step ST31:

The reproduction apparatus 15 reads out the disc ID from a disc type recording medium 2 via the recording medium interface 89 and stores this in the memory 88 when a disc type recording medium 2 is set at a predetermined access position.

Step ST32:

The controller 87 of the reproduction apparatus 15 reads out the disc ID stored in the memory 88 at step ST31 and verifies for any tampering and the legitimacy.

This verification will be explained in detail later.

Step ST33:

When the controller 87 verifies at step ST32 that the disc ID is legitimate, the routine proceeds to the processing of step ST35, while when the disc ID is not legitimate, the routine proceeds to the processing of step ST34.

Step ST34:

The controller 87 stops (prohibits) the decoding and reproduction of the encrypted content data ECONT recorded in the disc type recording medium 2.

Step ST35:

The controller 87 reads the revocation list DIRL from the disc type recording medium 2 via the recording medium interface 89.

Then, when a digital signature is created using the public key encryption technique as a tampering verification value of the read out revocation list DIRL, the controller 87 verifies the same by the signature verification key (public key). Further, when the message authentication code MAC is imparted as the tampering verification value, the MAC verification processing explained previously by referring to FIG. 8 is executed.

Then, the controller 87 compares the version of the revocation list DIRL and the version of the revocation list DIRL already stored in the memory 88 conditional upon judgment that the revocation list DIRL has not been tampered with.

When the version of the read out revocation list DIRL is newer than the revocation list DIRL already stored in the memory 88, the controller 87 updates the revocation list DIRL in the memory 88 by the read out revocation list DIRL.

Step ST36:

The controller 87 decides whether or not the disc ID read out at step ST31 is in the revocation list DIRL. When deciding it is, the routine proceeds to step ST38, while when it is not, the routine proceeds to step ST37.

Step ST37:

The controller 87 stops (prohibits) the decoding and reproduction of the encrypted content data ECONT stored in the disc type recording medium 2.

Step ST38:

The controller 87 reads out the encrypted content data ECONT recorded in the disc type recording medium 2 and decodes and reproduces this.

The processing of step ST38 will be explained in detail later.

Below, a detailed explanation will be given of the verification (ST32) of the disc ID shown in FIG. 17.

FIG. 18 is a flow chart for explaining step ST32 shown in FIG. 17.

The processing of FIG. 18 corresponds to the steps of the fourth aspect of the invention, step ST42 corresponds to the first step, and steps ST43 to ST46 correspond to the second step.

Further, by the controller 87 performing the processing of FIG. 18, the means of the sixth aspect of the invention is realized.

Step ST41:

The controller 87 of the reproduction apparatus 15 extracts the signature data SIG(w) (the signature data of the fourth to sixth aspects of the invention) in a disc ID(w) read out at step ST31 shown in FIG. 17.

Step ST42:

The controller 87 generates a message M(w)' (the first data of the fourth aspect of the invention) from the signature data SIG(w) read out at step ST41 based on the public key data (the public key data of the fourth to sixth aspects of the invention) of the management apparatus 12 (central authority CA) read out from the memory 88 and the opened parameters.

Step ST43:

The controller 87 compares the message M(w) or M (the second data of the fourth aspect of the invention) in the disc ID(w) and the message M(w)' generated at step ST42.

Step ST44:

When the controller 87 judges the coincidence in the comparison of step ST43, the routine proceeds to step ST45, while when not deciding so, the routine proceeds to step ST46.

Step ST45:

The controller 87 judges that the disc ID(w) extracted at step ST41 is legitimate.

Step ST46:

The controller 87 judges that the disc ID(w) extracted at step ST41 is illegitimate.

Below, an explanation will be given of the processing for reproduction of step ST38 shown in FIG. 17.

FIG. 19 is a flow chart for explaining the processing for reproduction of step ST38 shown in FIG. 17.

Step ST51:

The reproduction apparatus 15 reads out the encryption key information, that is, the enabling key block EKB, from the disc type recording medium 2 via the recording medium interface 89.

Step ST52:

The controller 87 executes the processing for decoding the enabling key block EKB based on the device node key data DNK provided to the reproduction apparatus in advance by the hierarchical type key data distribution structure as explained before by using FIG. 11 and acquires the content key data.

Step ST53:

The controller 87 reads out the encrypted content data ECONT from the disc type recording media 2 via the recording medium interface 89.

Step ST54:

The controller 87 uses the content key data acquired at step ST52 to decode the encrypted content data ECONT read out it step ST53.

Step ST55:

When deciding that all encrypted content data ECONT recorded in the disc type recording medium 2 are decoded, the controller 87 ends the processing, while when deciding not so, it returns to step St53.

As explained above, the content provision system 1 generates disc ID's recorded in the disc type recording media 2 as signature data in the management apparatus 12 based on the secret key data of the management apparatus 12.

Further, each reproduction apparatus 15 verifies the disc ID's read out from the disc type recording media 2 by using the public key data of the management apparatus 12.

For this reason, when the disc ID recorded in a disc type recording medium 2 has been tampered with or generated by an illegitimate person, this fact can be easily detected by the reproduction apparatus 15 etc.

As a result, it becomes possible to effectively suppress the circulation of illegitimately copied disc type recording media 2, and the profits of the content provider can be protected.

As explained above, in the first embodiment, as the disc ID, use was made of not any value, but a value generated and signed by the management apparatus 12 of the central authority CA as a reliable authority.

Further, in the first embodiment, the content key data used for obtaining the encrypted content data ECONT by encrypting the content data is generated independently from the disc ID.

In the following embodiments, the case where the content key data is derived from the disc ID will be illustrated.

By this, the effect of using any disc ID by an illegitimate person to unrestrictedly produce pirated copy discs can be further raised.

<Second Embodiment>

The second embodiment is an embodiment corresponding to the seventh to the 12th and 26th aspects of the invention.

The content provision system of the present embodiment is the same as the content provision system 1 of the first embodiment except for the processing for generation of the disc ID by the management apparatus 12 shown in FIG. 4, the processing for verification of the disc ID shown in FIG. 18, and the processing for acquisition of the content decoding data in the processing for reproduction of FIG. 19.

In the present embodiment, the disc ID is generated so as to be able to derive the common message S for each title from the disc ID. This message S is used as the content key data.

Below, an explanation will be given of the method of generation of disc ID's of the management apparatus 12a in the present embodiment.

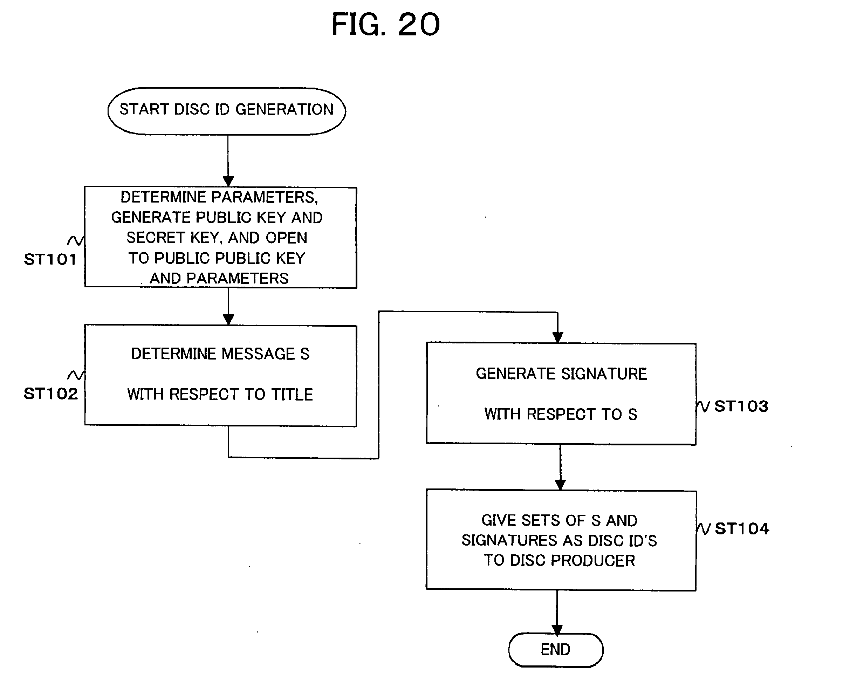

FIG. 20 is a flow chart for explaining the method of generation of the disc ID performed by the management apparatus 12a in the content provision system of the present embodiment.

Each processing shown in FIG. 20 is realized by executing a program PRG1a by the controller 27. In this case, the program PRG1a corresponds to the eighth aspect of the invention.

Further, by executing the steps shown in FIG. 20 by the controller 27, the first means and the second means of the ninth aspect of the invention are realized. In this case, the management apparatus 12a corresponds to the data processing apparatus of the eighth and ninth aspects of the invention.

Note that, all or part of the processing shown in FIG. 20 does not have the format of executing the program PRG1a by the controller 27 and can be realized by hardware such as a circuit for realizing the same functions as well.

Step ST101:

The controller 27 of the management apparatus 12a determines the key data (public key data and the secret key data of the central authority CA) for the digital signature and the parameters for generating and verifying the signature.

The controller 27 opens to the public the public key data and the parameters.

The opening is realized by for example the controller 27 performing transmission via the network via the input/output interface 24.

The processing of step ST101 may be carried out only one time at the time of setup of the management apparatus 12.

Step ST102:

The management apparatus 12 receives as input the title of the content (for example a movie) and number W (W≧2) of the produced discs from the content provider via the input/output interface 24 and stores this in the main memory 22.

The processing unit 26 determines the message S (data S of the seventh to ninth aspects of the invention) with respect to the title of the content data.

The message S becomes a value derived from the disc ID explained later and used as the content key data.

Step ST103:

The processing unit 26 uses the message S determined at step ST102, a random number r(w), and the parameters to generate W number of different digital signature data SIG(w).

Here, w=1, 2,..., W, and r(w) are individual random numbers.

Step ST104:

The controller 27 provides sets (S, SIG(w)) together with the title to the disc producer as the w-th disc ID(w)'s.

The disc production apparatus 14 of the disc producer produces disc type recording media 2a (the recording media of the 26th aspect of the invention) recording the above disc ID(w)'s in the routine explained above by using FIG. 6.

Further, the disc production apparatus 14 records the encrypted content data ECONT obtained by encrypting the content data by using the message S determined at step ST102 as the content key data in the disc type recording media 2a.

Below, an explanation will be given of an example of the operation of the reproduction apparatus 15a in the present embodiment.

The reproduction apparatus 15a of the present embodiment differs from the first embodiment only in the processings of step ST32 and step ST38 shown in FIG. 17.

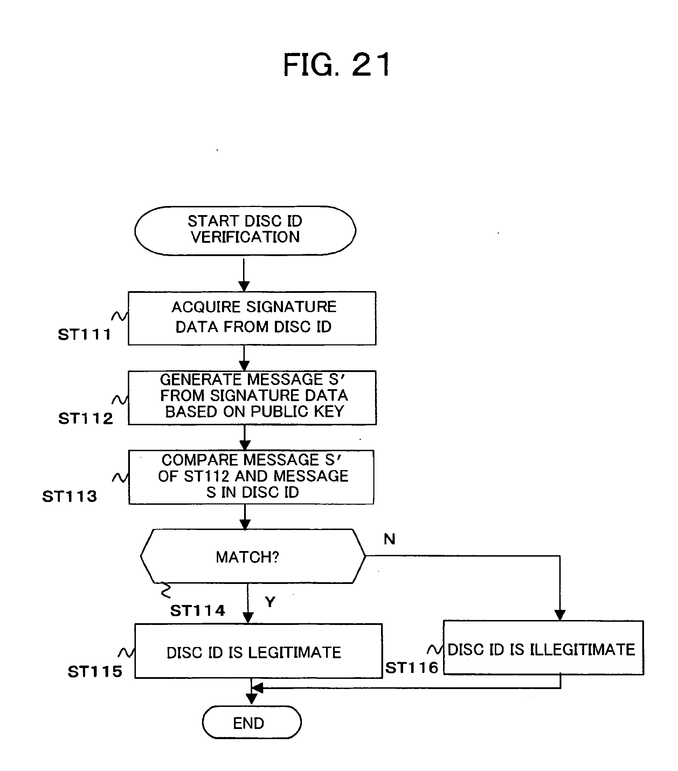

FIG. 21 is a flow chart for explaining the verification of a disc ID by the reproduction apparatus 15a in the present embodiment.

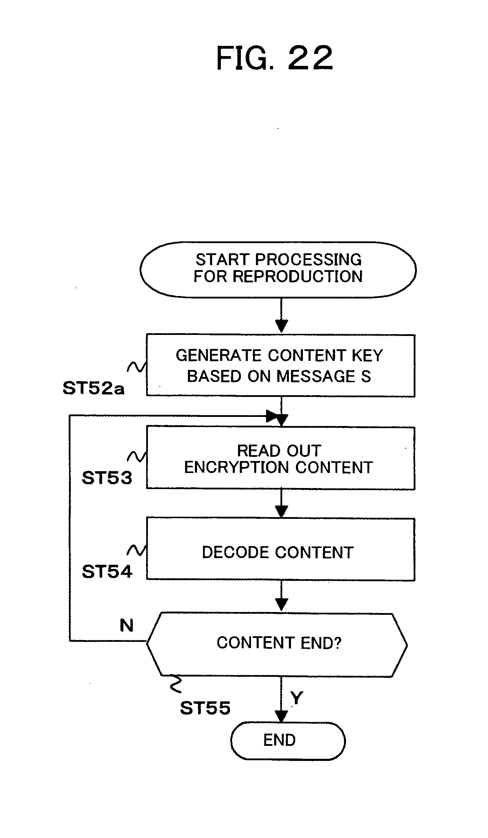

The processing shown in FIG. 21 corresponds to the first step of the 10th aspect of the invention, and the processing shown in FIG. 22 corresponds to the second step of the 10th aspect of the invention.

Further, the first means of the 12th aspect of the invention is realized by the controller 87 executing the processing shown in FIG. 21, and the second means of the 12th aspect of the invention is realized by executing the processing of FIG. 22.

Further, the following processings are realized by the controller 87 of the reproduction apparatus 15b executing a program PRG3c (the program of the 17th aspect of the invention).

Step ST111:

The controller 87 of the reproduction apparatus 15a extracts the signature data SIG(w) from the disc ID(w) read out from the disc type recording medium 2a explained above at step ST31 shown in FIG. 17.

Step ST112:

The controller 87 generates the message S' (the first data of the 10th to the 12th aspects of the inventions) from the signature data SIG(w) extracted at step ST111 based on the public key data of the management apparatus 12 (central authority CA) and the opened parameters read out from the memory 88.

Step ST113:

The controller 87 compares the message S (the second data of the 10th to the 12th aspects of the invention) in the disc ID(w) and the message S' generated at step ST112.

Step ST114:

When the controller 87 decides on coincidence in the comparison of step ST113, the routine proceeds to step ST115, while when deciding not so, the routine proceeds to step ST116.

Step ST115:

The controller 87 judges that the disc ID(w) taken out at step ST111 is legitimate.

Step ST116:

The controller 87 judges that the disc ID(w) taken out at step ST111 is illegitimate.

FIG. 22 is a flow chart for explaining the processing for reproduction of step ST38 shown in FIG. 17 in the present embodiment.

The present embodiment is the same as that explained in the first embodiment by using FIG. 19 except that step ST51 does not exist, and step ST52a is carried out in place of step ST52.

Step ST52a:

The controller 87 of the reproduction apparatus 15a generates the content key data (decoding key) based on the message S in the disc ID(w) and the root key data explained by using FIG. 9 acquired by the reproduction apparatus 15a conditional on the legitimacy of the disc ID being confirmed by the verification of FIG. 21. The controller 87 defines for example the exclusive logical OR of the root key data and the message S as the content key data.

By the content provision system of the present embodiment, the same effects as those by the content provision system 1 of the first embodiment are obtained.

<Third Embodiment>

The third embodiment is an embodiment corresponding to the 13th to 18th and 27th aspects of the invention.

The content provision system of the present embodiment is the same as the content provision system 1 of the first embodiment except for the processing for generation of the disc ID's by the management apparatus 12 shown in FIG. 4, the processing for verification of a disc ID shown in FIG. 18, and the processing for acquisition of the content decoding data in the processing for reproduction of FIG. 19.

In the present embodiment, the disc ID's are generated so that the common message S can be derived from the disc ID's for each title. This message S is used as the content key data.

Below, an explanation will be given of the method of generation of disc ID's of a management apparatus 12b in the present embodiment.

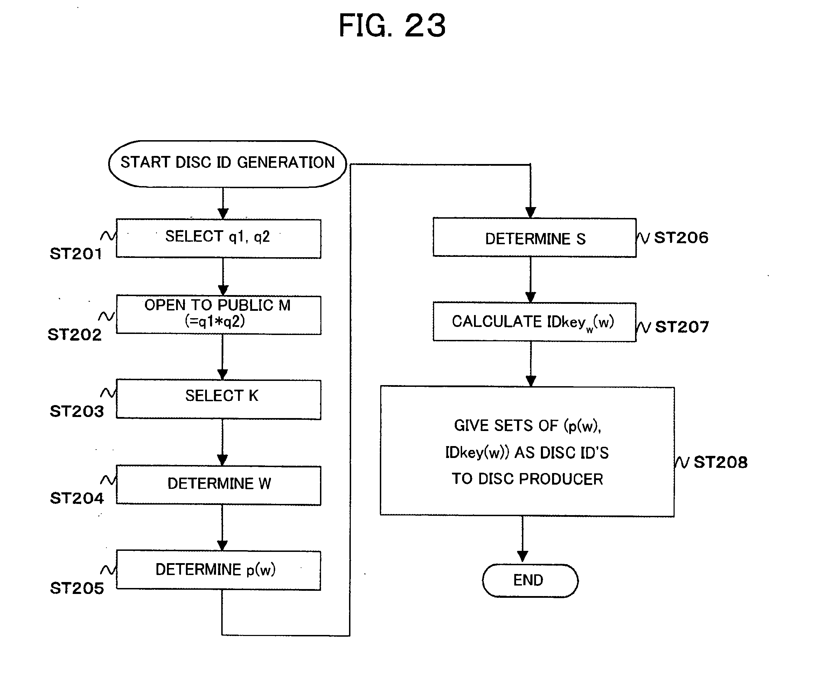

FIG. 23 is a flow chart for explaining the method of generation of disc ID's performed by the management apparatus 12b in the content provision system of the present embodiment.

Each processing shown in FIG. 23 is realized by the controller 27 of the management apparatus 12b executing a program PRG1b. The program PRG1b corresponds to the 14th aspect of the invention in this case.

Further, by the controller 27 executing the steps shown in FIG. 23, the first means and the second means of the 15th aspect of the invention are realized. In this case, the management apparatus 12b corresponds to the data processing apparatuses of the 14th and the 15th aspects of the invention.

Note that, all or part of the processing shown in FIG. 23 need not be of a form obtained by the controller 27 executing the program PRG1b and can be realized by hardware such as a circuit realizing the same function as well.

Step ST201:

The controller 27 of the management apparatus 12b selects prime numbers q1 and q2 large enough to be safe when used in RSA encryption.

Step ST202:

The controller 27 opens to the public the data M as a product of the prime numbers q1 and q2 selected at step ST201.
The processing of steps ST201 and ST202 may be carried out only one time at the time of the setup of the system.

Step ST203:

The controller 27 selects the data K satisfying K∈ Z*M (K is the generator of a cyclic group Z*M) at random with respect to each title.
Here, for example, X∈Z*M indicates an element of a set having inverse elements having x as the normal among integers x of 1 to X-1.

Step ST204:

The controller 27 receives the title of the content and the maximum number of production W of the disc type recording media 2b from the content producer.

Step ST205:

The controller 27 determines prime numbers p (w) (w = 1, 2,..., W) for exactly a number corresponding to the number W of step ST204. For example, it is also possible to set the w-th odd number as p(w).

Step ST206:

The controller 27 determines the data S (=KT modM) as a value derived from the disc ID's corresponding to the title.
Note, the following equation (1) stands.

$$T = \Pi_{w-1}^{W} Pw \qquad (1)$$

Step ST207:

The controller 27 computes (KT/p(w)modM) and obtains the data IDkey(w)'s as the result thereof.

Step ST208:

The controller 27 provides, as the w-th disc ID (w)'s, sets (p(w), IDkey(w)) of the prime numbers p(w) determined at step ST205 and the data IDkey(w)'s obtained at step ST207 as the disc ID's together with the title to the disc producer.
The disc production apparatus 14 of the disc producer produces the disc type recording media 2b (the recording media of the 27th aspect of the invention) recording the disc ID(w)'s by the routine explained above by using FIG. 6.

Further, the disc production apparatus 14 generates the encrypted content data ECONT by encrypting the content data by using the data S (=KT modM) determined at step ST206 explained above as the content key data and records this in the disc type recording media 2b.

Below, an explanation will be given of an example of the operation of the reproduction apparatus 15b in the present embodiment.

The reproduction apparatus 15b of the present embodiment differs from the case of the first embodiment only in the processing of step ST32 and step ST38 shown in FIG. 17.

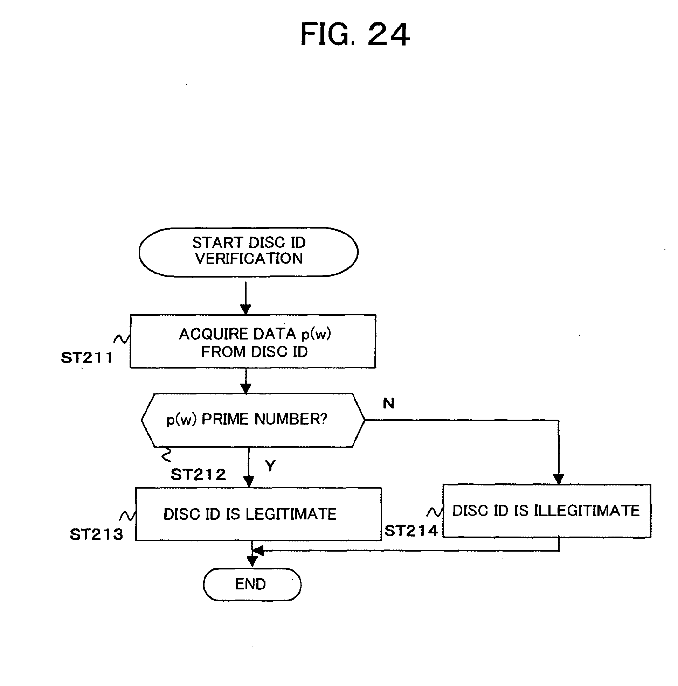

FIG. 24 is a flow chart for explaining the verification of a disc ID by a reproduction apparatus 15b in the present embodiment.

The processing shown in FIG. 24 corresponds to the first step of the 16th aspect of the invention.

Further, by the controller 87 executing the processing shown in FIG. 24, the first means of the 18th aspect of the invention is realized.

Further, the following processing is realized by the controller 87 of the reproduction apparatus 15b executing the program PRG3b (the program of the 17th aspect of the invention).

Step ST211:

The controller 87 of the reproduction apparatus 15b extracts the data p(w) in the disc ID(w) read out from the disc type recording medium 2a explained above at step ST32 shown in FIG. 17.

Step ST212:

The controller 87 decides whether or not the data p(w) extracted at step ST111 is a prime number.

When the controller 87 decides that the data p(w) is a prime number, the routine proceeds to step ST213, while when it decides not so, the routine proceeds to step ST214.

Step ST213:

The controller 87 judges that the disc ID(w) taken out at step ST211 is legitimate.

Step ST214:

The controller 87 judges that the disc ID(w) taken out at step ST211 is illegitimate.

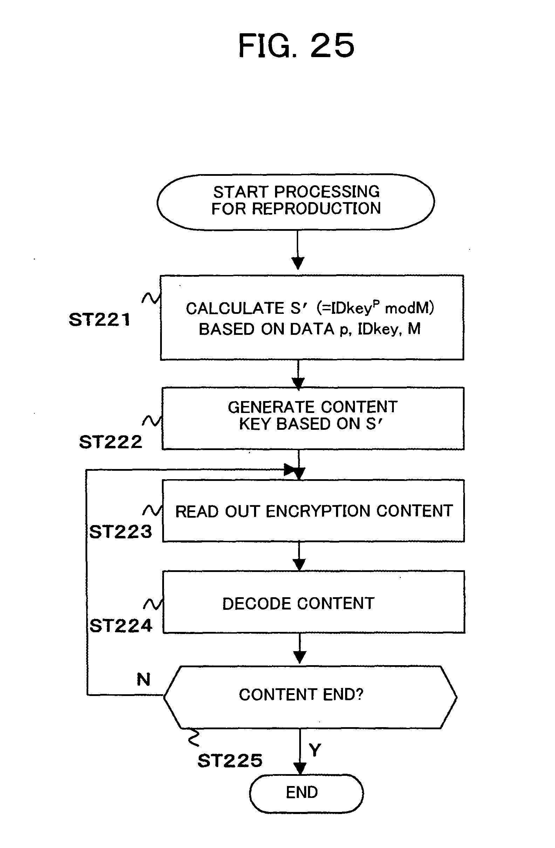

FIG. 25 is a flow chart for explaining the processing for reproduction of step ST38 shown in FIG. 17 in the present embodiment.

Step ST221 shown in FIG. 25 corresponds to the second step of the 16th aspect of the invention, and step ST224 corresponds to the third step of the 16th aspect of the invention.

Further, by the controller 87 executing step ST221, the first means of the 18th aspect of the invention is realized, and the second means of the 18th aspect of the invention is realized by executing step ST224.

Step ST221:

The controller 87 of the reproduction apparatus 15b calculates (IDkeypmodM) based on the data p and IDKey read out from the disc type recording medium 2 and the opened data M via the recording medium interface 89 and defines the result as the data S'.

Step ST222:

The controller 87 generates the content key data (decoding key) based on the data S' calculated at step ST221 and the root key data explained by using FIG. 9 acquired by the reproduction apparatus 15b. The controller 87 defines for example the exclusive logical OR between the root key data and the data S' as the content key data.

Step ST223:

The controller 87 reads out the encrypted content data ECONT from the disc type recording medium 2b via the recording medium interface 89.

Step ST224:

The controller 87 uses the content key data of step ST222 to decode the encrypted content data ECONT read out at step ST223.

Step ST225:

When deciding that all encrypted content data ECONT recorded in the disc type recording medium 2b has been decoded, the controller 87 ends the processing, while when not deciding so, it returns to step ST223.

By the content provision system of the present embodiment, the same effects as those of the content provision system 1 of the first embodiment are obtained.

<Fourth Embodiment>

The fourth embodiment is an embodiment corresponding to the 19th to 24th and 25th aspects of the invention.

The content provision system of the present embodiment is the same as the content provision system 1 of the first embodiment except the processing for generation of the disc ID's by the management apparatus 12 shown in FIG. 4, the processing for verification of a disc ID shown in FIG. 18, and the processing for acquisition of the content decoding data in the processing for reproduction of FIG. 19.

Below, an explanation will be given of the method of generation of disc ID's of a management apparatus 12c in the present embodiment.

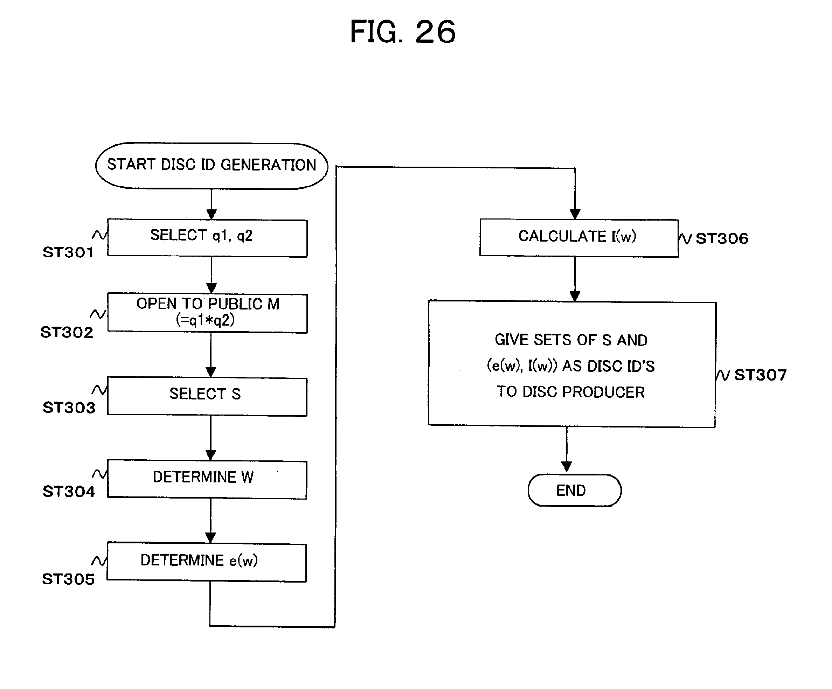

FIG. 26 is a flow chart for explaining the method of generation of the disc ID's performed by the management apparatus 12c in the content provision system of the present embodiment.

Each processing shown in FIG. 26 is realized by the controller 27 executing a program PRG1c. The program PRG1c corresponds to the 20th aspect of the invention in this case.

Further, by the controller 27 executing the steps shown in FIG. 26, the first means and the second means of the 21st aspect of the invention are realized. In this case, the management apparatus 12c corresponds to the data processing apparatuses of the 20th and the 21st aspects of the invention.

Note that, all or part of the processings shown in FIG. 26 does not have the format of executing the program PRG1c by the controller 27, but can be realized by the hardware such as the circuit realizing the same function as well.

Step ST301:

The controller 27 of the management apparatus 12c selects prime numbers q1 and q2 large enough to be safe when used in RSA encryption.

Step ST302:

The controller 27 opens to the public the data M as a product of the prime numbers q1 and q2 selected at step ST301.

The processing of steps ST301 and ST302 may be carried out only one time at the time of setup of the system.

Step ST303:

The controller 27 selects data S satisfying $S \in Z^*M$ (S is the generator of a cyclic group $Z^*M$) at random for each title. The data S becomes a value derived from the disc ID's.

Step ST304:

The controller 27 receives the title of the content and the maximum number of production W of the disc type recording media 2b from the content producer.

Step ST305:

The controller 27 selects data e(w) different from each other satisfying $e(w) \in Z^*M$ (e(w) is the generator of a cyclic group $Z^*M$).

Here, e(w) and $\lambda(M)$ become prime with respect to each other, that is, the greatest common divisor of e(w) and $\lambda(M)$ becomes 1. Note that $\lambda(M)$ is the least common multiple of the prime numbers (q1-1) and (q2-1).

Step ST306:

The controller 27 computes (Sd(w)modM) and obtains the data I(w) as the results thereof.

Here, d(w) is the reciprocal of the above e(w) when the above $\lambda(M)$ is the normal. Namely, d(w) becomes equal to e(w) -1mod $\lambda(M)$.

Step ST307:

The controller 27 provides, as the w-th disc ID (w), sets (e(w), I(w)) of the data e(w) determined at step ST305 and the data I(w) obtained at step ST306 as the disc ID(w)'s to the disc producer together with the title.

The disc production apparatus 14 of the disc producer produces the disc type recording media 2c (the recording media of the 28th aspect of the invention) recording the disc ID(w)'s by the routine explained above by using FIG. 6.

Further, the disc production apparatus 14 encrypts the content data by using the data S selected at step ST303 explained above as the content key data to generate the encrypted content data ECONT and records this in the disc type recording media 2c.

Below, an explanation will be given of an example of the operation of the reproduction apparatus 15c in the present embodiment.

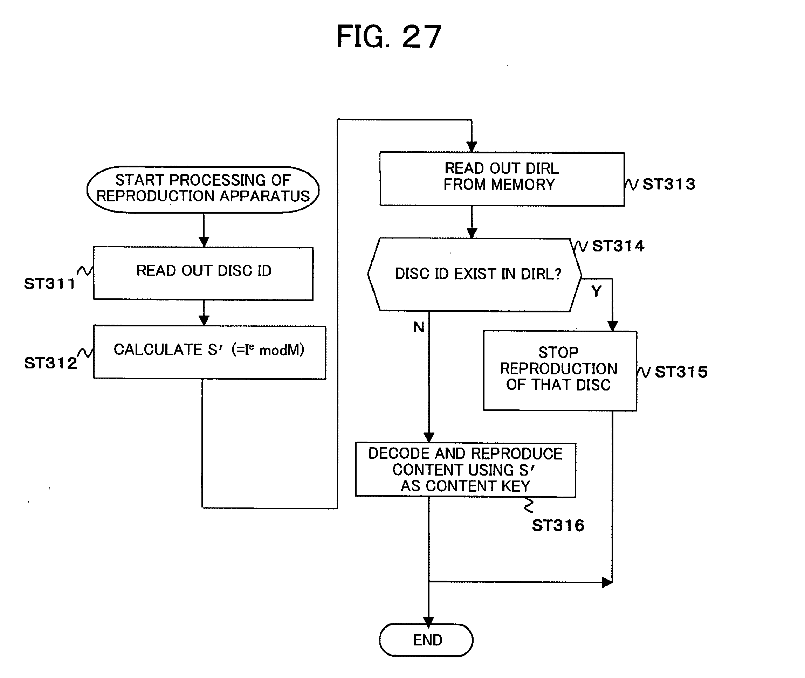

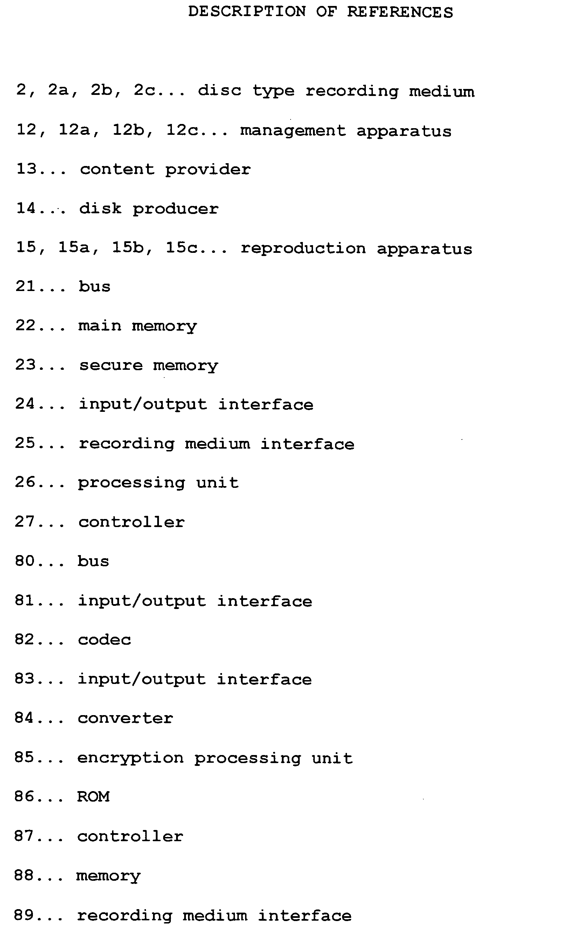

FIG. 27 is a view for explaining the example of the operation of the reproduction apparatus 15c.

Step ST312 shown in FIG. 27 corresponds to the first step of the 22nd aspect of the invention, and step ST316 corresponds to the second step of the 22nd aspect of the invention.

Further, by the controller 87 executing step ST312, the first means of the 24th aspect of the invention is realized, and by executing step ST316, the second means of the 24th aspect of the invention is realized.

Further, each step shown in FIG. 27 is realized by the controller 87 of the reproduction apparatus 15c executing the program PRG3c (the program of the 23rd aspect of the invention).

Step ST311:

When a disc type recording medium 2c is set at a predetermined access position, a reproduction apparatus 15c reads out the disc ID from the disc type recording medium 2c via the recording medium interface 89 and stores this in the memory 88.

Step ST312:

The controller 87 of the reproduction apparatus 15c uses the data e(w) and I(w) in the disc ID recorded in the memory 88 to calculate I(w)e(w)modM and defines the result as the data S'.

Step ST313:

The controller 87 reads out the revocation list DIRL from the disc type recording medium 2c via the recording medium interface 89.

Then, when a digital signature is created using the public key encryption technique as a tampering verification value of the read out revocation list DIRL, the controller 87 verifies this by the signature verification key (public key). Further, when the message authentication code MAC is imparted as a tampering verification value, the MAC verification processing explained previously by referring to FIG. 8 is executed.

Then, the controller 87 compares the version of the revocation list DIRL and the revocation list DIRL already stored in the memory 88 conditional on judgment that the revocation list DIRL has not been tampered with.

When the version of the read out revocation list DIRL is newer than the revocation list DIRL already stored in the memory 88, the controller 87 updates the revocation list DIRL in the memory 88 by the read out revocation list DIRL.

Step ST314:

The controller 87 decides whether or not the disc ID read out at step ST311 is in the revocation list DIRL. When deciding it does, the routine proceeds to step ST315, while when deciding it does not, the routine proceeds to step ST316.

Step ST315:

The controller 87 stops (prohibits) the reproduction of the encrypted content data ECONT recorded in the disc type recording medium 2c.

Step ST316:

The controller 87 reads out the encrypted content data ECONT recorded in the disc type recording medium 2c, decodes the encrypted content data ECONT by using the content key data acquired based on the data S' generated at step ST312, and continuously reproduces the same.

The controller 87 defines for example the exclusive logical OR of the root key data and the data S' as the content key data.

By the content provision system of the present embodiment as well, effects the same those of the content provision system 1 of the first embodiment are obtained.

According to the present invention, a first effect is obtained that it is possible to provide a data processing method capable of generating identification data in a format by which illegitimate generation and tampering are difficult when managing recording media based on identification data, a program of the same, and an apparatus of the same. Further, according to the present invention, a second effect is obtained that it is possible to provide a data processing method capable of suitably verifying identification data generated by the data processing method, program of the same, and apparatus of the same for achieving the first object, a program of the same, and an apparatus of the same.

Further, according to the present invention, a third effect is obtained that it is possible to provide a recording medium recording identification data generated by the data processing method, program of the same, and apparatus of the same for achieving the first object.

INDUSTRIAL CAPABILITY

The present invention can be utilized in a data processing system for processing according to identification data for identifying recording media.

**Claims**

1. A data processing method for generating identification data for identifying recording media, comprising:

   a first step of using secret key data of a management side of said identification data to generate a plurality of different signature data and a second step of assigning said plurality of signature data generated at said first step as said identification data to a plurality of different recording media respectively.

2. A data processing method as set forth in claim 1, wherein:

   said first step uses the first data, said secret key data, and predetermined second data to generate said plurality of signature data able to generate said second data based on an public key data corresponding to said secret key data, for each of a plurality of different first data and said second step generates said identification data including the signature data and said second data for each of said plurality of signature data generated at said first step and assigns the identification data to said recording media.

3. A program executed by a data processing apparatus for generating identification data for identifying recording media, comprising:

a first routine for using secret key data of a management side of said identification data to generate a plurality of different signature data and a second routine of assigning said plurality of signature data generated by said first routine as said identification data to a plurality of different recording media respectively.

4. A data processing apparatus for generating identification data for identifying recording media, comprising:

a first means for using secret key data of a management side of said identification data to generate a plurality of different signature data and a second means for assigning said plurality of signature data generated at said first means as said identification data to a plurality of different recording media respectively.

5. A data processing method for verifying legitimacy of identification data assigned to recording media for identifying the recording media, comprising:

a step of using public key data of the management side of said identification data to verify the legitimacy of said identification data.

6. A data processing method as set forth in claim 5, wherein said step has

a first step of generating the first data from said signature data included in said identification data by using said public key data and a second step of comparing the second data included in said identification data and said first data generated at said first step and verifying the legitimacy of said identification data based on the result of the comparison.

7. A program executed by a data processing apparatus for verifying legitimacy of identification data for identifying recording media assigned to the recording media, comprising

a routine for using public key data of a management side of said identification data to verify the legitimacy of said identification data.

8. A data processing apparatus for verifying the legitimacy of identification data for identifying recording media assigned to said recording media, comprising:

a means for using public key data of a management side of said identification data to verify the legitimacy of said identification data.

9. A data processing method for generating identification data for identifying recording media, comprising:

a first step of using secret key data and data S of a management side of said identification data to generate a plurality of different signature data able to decode said data S based on public key data of the management side and a second step of generating identification data including signature data and said data S for each of said plurality of signature data generated at said first step and assigning said plurality of identification data to the different plurality of recording media.

10. A data processing as set forth in claim 9, further having a third step of writing the encryption data encrypted by using said data S as the encryption key and said identification data into said recording media.

11. A program executed by a data processing apparatus for generating identification data for identifying recording media, comprising:

a first routine for using secret key data and data S of a management side of said identification data to generate a plurality of different signature data able to decode the data S based on said public key data of the management side and a second routine for generating identification data including signature data and said data S for each of said plurality of signature data generated by said first routine and assigning said plurality of identification data to the different plurality of recording media respectively.

12. A data processing apparatus for generating identification data for identifying recording media, comprising:

a first means for using secret key data and data S of a management side of said identification data to generate a plurality of different signature data able to decode data S based on said public key data of the management side and a second means for generating identification data including signature data and the data S for each of said plurality of signature data generated by said first means and assigning said plurality of identification data to the different plurality of recording media respectively.

**13.** A data processing method for verifying the legitimacy of identification data for identifying recording media assigned to recording media, comprising:

a first step of using public key data of a management side of said identification data to generate first data from signature data in said identification data and comparing the first data and second data in said identification data to verify the legitimacy of said identification data and a second step of decoding encryption data read out from said recording media by using said second data in said identification data when it is verified at said first step that said identification data is legitimate.

**14.** A program executed by a data processing apparatus for verifying the legitimacy of identification data for identifying recording media assigned to the recording media, comprising:

a first routine for using public key data of a management side of said identification data to generate first data from signature data in said identification data and comparing the first data and second data in said identification data to verify the legitimacy of said identification data and a second routine for decoding encryption data read out from said recording media by using said second data in said identification data when it is verified by said first routine that said identification data is legitimate.

**15.** A data processing apparatus for verifying the legitimacy of the identification data for identifying the related recording media assigned to the recording media, comprising:

a first means for using public key data of a management side of said identification data to generate first data from signature data in said identification data and comparing the first data and second data in said identification data to verify the legitimacy of said identification data and a second means for using said second data in said identification data to decode encryption data read out from said recording media when it is verified by said first means that said identification data is legitimate.

**16.** A data processing method for generating identification data ID(w) individually assigned to W number of recording media STM(w) where the opened data M is a product of two prime numbers, T is a product of W(W≧2) number of different prime numbers p(w), w is an integer of 1≦w≦W, and K is a generator of a cyclic group Z*M, comprising:

a first step of calculating (KT/p(w) modM) and a second step of assigning the identification data ID(w) including (KT/p(w) modM) calculated at said first step to the recording media STM(w).

**17.** A data processing method as set forth in claim 16, further having a third step of writing the encryption data encrypted by using (KT modM) as the encryption key and said identification data ID(w) into said recording media STM(w).

**18.** A program executed by a data processing apparatus for generating identification data ID(w) individually assigned to W number of recording media STM (w) where opened data M is a product of two prime numbers, T is a product of W(W≧2) number of different prime numbers p(w), w is an integer of 1≦w≦W, and K is a generator of a cyclic group Z*M, comprising:

a first routine for calculating (KT/p(w) modM) and a second routine for assigning identification data ID(w) including (KT/p(w) modM) calculated by said first routine to the recording media STM (w).

**19.** A data processing apparatus for generating identification data ID(w) assigned to W number of recording media STM(w) where opened data M is a product of two prime numbers, T is a product of W(W≧2) number of different prime numbers p(w), w is an integer of 1≦w≦W, and K is a generator of a cyclic group Z*M, comprising:

a first means for calculating (KT/p(w) modM) and a second means for assigning identification data ID(w) including (KT/p(w) modM) calculated by said first means to the recording media STM (w).

**20.** A data processing method for verifying a legitimacy of identification data for identifying recording media assigned to the recording media, comprising:

a first step of verifying whether or not data p included in said identification data is a prime number; a second step of using data IDKey and said data p included in said identification data and opened data M to calculate (IDKeyp modM) when it is verified at said first step that said data p is a prime number; and a third step of using a decoding key obtained based on (IDKeyp modM) calculated at said second step to decode encryption data recorded at said recording media.

**21.** A program executed by a data processing apparatus for verifying a legitimacy of identification data for identifying recording media assigned to the recording media, comprising:

a first routine for verifying whether or not data $p$ included in said identification data is a prime number;

a second routine for using data IDKey and said data $p$ included in said identification data and opened data M to calculate (IDKeyp modM) when it is verified by said first routine that said data $p$ is a prime number; and

a third routine for using a decoding key obtained based on (IDKeyp modM) calculated by said second routine to decode the encryption data recorded in said recording media.

**22.** A processing apparatus for verifying a legitimacy of identification data for identifying recording media assigned to recording media, comprising:

a first means for verifying whether or not the data $p$ included in said identification data is a prime number;

a second means for using the data IDKey and said data $p$ included in said identification data and opened data M to calculate (IDKeyp modM) when it is verified by said first means that said data $p$ is a prime number; and

a third means for using a decoding key obtained based on (IDKeyp modM) calculated by said second means to decode the encryption data recorded in said recording media.

**23.** A data processing method for generating identification data ID(w) assigned to each of W number of recording media STM(w) when data which is the product of the prime numbers q1 and q2 and is opened is M, w is an integer of $1 \leq w \leq W$, W($W \geq 2$) number of different data are e(w), e(w) is a generator of a cyclic group Z*M, e(w) and $\lambda$(M) are primes with respect to each other, and $\lambda$(M) is the least common multiple of (q1-1) and (q2-1), comprising:

a first step of using the data S of the generator of a cyclic group Z*M to calculate (Sd(w) modM), the data d(w) of the reciprocal of e(w) when $\lambda$(M) is normal, and said data M and

a second step of assigning identification data ID(w) including the (Sd(w) modM) calculated at said first step to the recording media STM(w).

**24.** A data processing method as set forth in claim 23, further having a third step of writing the encryption data encrypted by using said data S as the encryption key and said identification data ID(w) into said recording media STM(w).

**25.** A program executed by a data processing apparatus for generating identification data ID(w) assigned to each of W number of recording media STM(w) when data which is a product of prime numbers q1 and q2 and is opened is M, w is an integer of $1 \leq w \leq W$, W($W \geq 2$) number of different data are e(w), e(w) is a generator of a cyclic group Z*M, e(w) and $\lambda$(M) are primes with respect to each other, and $\lambda$(M) is the least common multiple of (q1-1) and (q2-1), comprising:

a first routine for using the data S of the generator of a cyclic group Z*M, the data d(w) of a reciprocal of e(w) when $\lambda$(M) is normal, and said data M to calculate (Sd(w) modM) and

a second routine for assigning identification data ID(w) including (Sd(w) modM) calculated by said first routine to the recording media STM(w).

**26.** A data processing apparatus for generating identification data ID(w) assigned to each of W number of recording media STM(w) when data which is a product of prime numbers q1 and q2 and opened is M, w is an integer of $1 \leq w \leq W$, W ($W \geq 2$) number of different data are e(w), e(w) is a generator of a cyclic group Z*M, e(w) and $\lambda$(M) are primes with respect to each other, and $\lambda$(M) is the least common multiple of (q1-1) and (q2-1), comprising:

a first means for using the data S of the generator of a cyclic group Z*M, the data d(w) of a reciprocal of e(w) when $\lambda$(M) is normal, and said data M to calculate (Sd(w) modM) and

a second means for assigning identification data ID(w) including (Sd(w) modM) calculated by said first means to the recording media STM(w).

**27.** A data processing method for verifying a legitimacy of identification data for identifying recording media assigned to the recording media, comprising:

a first step of using data $e$ and data I included in said identification data and opened data M to calculate (Ie modM) and

a second step of using (Ie modM) calculated at said first step as the decoding key to decode the encryption data recorded in said recording media.

**28.** A program executed by a data processing apparatus for verifying the legitimacy of identification data for identifying recording media assigned to the recording media, comprising:

a first routine for using data $e$ and data I included in said identification data and opened data M to calculate (Ie modM) and
a second routine for using (Ie modM) calculated by said first routine as the decoding key to decode the encryption data recorded in said recording media.

29. A data processing apparatus for verifying a legitimacy of identification data for identifying recording media assigned to the recording media, comprising:

> a first means for using data $e$ and data I included in said identification data and opened data M to calculate (Ie modM) and
> a second means for using (Ie modM) calculated by said first means as the decoding key to decode encryption data recorded in said recording media.

30. A recording medium for recording data, recording identification data generated by using secret key data of a management side of said recording medium, verified in legitimacy based on the public key data of said management side, and identifying the recording medium.

31. A recording medium for recording data, recording identification data including signature data used for generating first data by using public key data of a management side of said recording medium and said second data used for verifying a legitimacy of the identification data by comparing the same with said first data and identifying said recording medium.

32. A recording medium for recording encryption data, recording identification data including

> data $p$ of a prime number and
> data IDKey used for calculating (IDKeyp modM) of content key data used for decoding said encryption data together with said data $p$ and the opened data M and
> identifying said recording medium.

33. A recording medium for recording encryption data, recording identification data including data $e$ used for calculating (Ie modM) of content key data used for decoding said encryption data together with opened data M and data I and identifying said recording medium.

# FIG. 1

DISC ID

ENCRYPTION
CONTENT
(ECONT)

ENCRYPTION
KEY
INFORMATION

REVOKATION
LIST DIRL
OF DISC ID

2(2a, 2b, 2c)

# FIG. 2

EP 1 523 006 A1

~12(12a, 12b, 12c)

DEVICE NODE KEY (DNK)

MANAGEMENT
APPARATUS

DISC ID
REVOKATION LIST

14

DISC
PRODUCTION
APPARATUS

2

15
(15a, 15b, 15c)

REPRODUCTION
APPARATUS

CONTENT
(ENCRYPTION)

EKB

13

CONTENT
PROVISION
DEVICE

(DEVICE NODE KEY (DNK))

1

# FIG. 3

12

27
CONTROLLER
PRG1 (1a, 1b, 1c)

21

23
SECURE MEMORY

26
PROCESSING UNIT

22
MAIN MEMORY

24
INPUT/ OUTPUT I/F

25
RECORDING MEDIA

29a, 29b

# FIG. 4

```
          ( START DISC ID GENERATION )
                      │
                      ▼
        ┌─────────────────────────────────┐
        │     DETERMINE PARAMETERS,        │
 ST1 〜 │    GENERATE PUBLIC KEY AND        │
        │  SECRET KEY, AND OPEN TO PUBLIC  │
        │    PUBLIC KEY AND PARAMETERS     │
        └─────────────────────────────────┘
                      │
                      ▼
        ┌─────────────────────────────────┐
        │                                  │
 ST2 〜 │   GENERATE DIGITAL SIGNATURE      │
        │                                  │
        │     WITH RESPECT TO MESSAGE      │
        └─────────────────────────────────┘
                      │
                      ▼
        ┌─────────────────────────────────┐
        │      GIVE SETS OF MESSAGE        │
 ST3 〜 │   AND SIGNATURES AS DISC ID'S     │
        │        TO DISC PRODUCER          │
        └─────────────────────────────────┘
                      │
                      ▼
                  ( END )                        12
```

# FIG. 5

EP 1 523 006 A1

# FIG. 6

```
        ┌──────────────────────────┐
        │  START DISC PRODUCTION   │
        │       PROCESSING         │
        └──────────────────────────┘
                     │
                     ▼
        ┌──────────────────────────┐
        │  ACQUIRE NEWEST DIRL     │  ST11
        │     AND DISC ID          │
        └──────────────────────────┘
                     │
                     ▼
        ┌──────────────────────────┐            ┌──────────────────────────┐
        │      ACQUIRE EKB         │  ST12      │   GENERATE DISC BY       │  ST15
        └──────────────────────────┘            │  STAMPER BASED ON        │
                     │                          │     MASTER DISC          │
                     ▼                          └──────────────────────────┘
        ┌──────────────────────────┐                        │
        │  ACQUIRE ENCRYPTION      │  ST13                  ▼
        │       CONTENT            │            ┌──────────────────────────┐
        └──────────────────────────┘            │      WRITE DISC ID       │  ST16
                     │                          └──────────────────────────┘
                     ▼                                      │
        ┌──────────────────────────┐                        ▼
        │  GENERATE MASTER DISC    │  ST14         ST17
        │  WRITING DIRL, EKB, AND  │            ┌──────────────────────────┐
        │  ENCRYPTION CONTENT      │            │  PRODUCED DISC NUMBER    │  N
        └──────────────────────────┘            │  = RECEIVED ID NUMBER ?  │
                                                └──────────────────────────┘
                                                            │ Y
                                                            ▼
                                                ┌──────────────────────────┐
                                                │          END             │
                                                └──────────────────────────┘
```

# FIG. 7

| |
|---|
| VERSION NUMBER — 51 |
| REVOKE DISC ID LIST — 52 |
| TAMPERING VERIFICATION VALUE (FOR EXAMPLE MAC) — 53 |

DIRL

# FIG. 8

MESSAGE M1 (INITIAL 8 BYTES)  MESSAGE M2 (NEXT 8 BYTES)  MESSAGE M3 (NEXT 8 BYTES)  ----  MESSAGE MN (LAST 8 BYTES)

INITIAL VALUE (Initial Value:IV)

KEY (K1)

DES ENCRYPTION    DES ENCRYPTION    DES ENCRYPTION    DES ENCRYPTION

I1    I2    I3    IN

E1    E2    E3    EN

MESSAGE AUTHENTICATION CODE (Message Authentication Code:MAC)

⊕ : EXCLUSIVE LOGICAL OR PROCESSING (UNIT OF 8 BYTES)

# FIG. 9

EP 1 523 006 A1

# FIG. 10A

ENABLING KEY BLOCK

(EKB:Enabling Key Block)EXAMPLE 1

TRANSMIT NODE KEY OF VERSION t
TO DEVICES 0, 1, AND 2

| VERSION (Version) :t | |
| --- | --- |
| INDEX | ENCRYPTION KEY |
| 0 | Enc(K(t)0, K(t)R) |
| 00 | Enc(K(t)00, K(t)0) |
| 000 | Enc(K000, K(t)00) |
| 001 | Enc(K(t)001, K(t)00) |
| 0010 | Enc(K0010, K(t)001) |

# FIG. 10B

ENABLING KEY BLOCK

(EKB:Enabling Key Block) EXAMPLE 2

TRANSMIT NODE KEY OF VERSION t
TO DEVICES 0, 1, AND 2

| VERSION (Version) :t | |
| --- | --- |
| INDEX | ENCRYPTION KEY |
| 000 | Enc(K000, K(t)00) |
| 001 | Enc(K(t)001, K(t)00) |
| 0010 | Enc(K0010, K(t)001) |

EP 1 523 006 A1

# FIG. 11

| VERSION (Version) : t | |
|---|---|
| INDEX | ENCRYPTION KEY |
| 000 | Enc(K000, K(t)00) |
| 001 | Enc(K(t)001, K(t)00) |
| 0010 | Enc(K0010, K(t)001) |
| Enc(K(t)00, K(t)con) | |

RECORDING MEDIA

K000

EKB PROCESSING → K(t)00

DECODING → K(t)con

K0000

ENCRYPTION → STORAGE

DEVICE 0

EP 1 523 006 A1

# FIG. 12

| VERSION | DEPTH |
|---|---|
| DATA POINTER | TAG POINTER |
| SIGNATURE POINTER | RESERVED |
| DATA PORTION (E(k0, Kroot), ...) ||
| TAG PORTION ({0, 0}, {1, 1}, ...) ||
| SIGNATURE ||

# FIG. 13A

# FIG. 13B

EP 1 523 006 A1

ENABLING KEY BLOCK (EKB:Enabling Key Block)

TRANSMIT NODE KEY OF VERSION t
TO DEVICES 0, 1, AND 2

| TOP NODE ADDRESS : KR | |
|---|---|
| DATA (ENCRYPTION KEY) | TAG |
| $Enc(K(t)0, K(t)R)$ | {0, 1} |
| $Enc(K(t)00, K(t)0)$ | {0, 0} |
| $Enc(K000, K(t)00)$ | {1, 1} |
| $Enc(K(t)001, K(t)00)$ | {0, 1} |
| $Enc(K0010, K(t)001)$ | {1, 1} |

{L TAG, R TAG}
0 WHERE THERE IS DATA IN EACH
DIRECTION OF LEFT (L) AND RIGHT (R),
AND 1 WHERE THERE IS NO DATA

(c)

DATA : $Enc(K(t)0, K(t)R)$, $Enc(K(t)00, K(t)0)$, ......

TAG : {0, 1}, {0, 0}, {1, 1}...

KR

K0

K00

K000    K001

K0000
K0001    K0010
K0011

0    1    2    3

# FIG. 14

KROOT (ROOT KEY) — 71

72 NODE KEY

M STAGES

CATEGORY A

CATEGORIES (2M)

75

SUB CATEGORY Aa

DEDICATED PLAYER — 76

TELEPHONE EQUIPPED WITH MUSIC PLAYING FUNCTION — 77

PHS

78

MOBILE PHONE — 77

79

N STAGES

73 LEAF KEY

EP 1 523 006 A1

# FIG. 15

ROOT NODE

CATEGORY NODE

T SYSTEM

DNK

8 STAGES

24 STAGES

32 STAGES

# FIG. 16

15(15a, 15b, 15c)

DIGITAL SIGNAL — 81 — INPUT/OUTPUT I/F

80

86 — ROM

87 — CONTROLLER | PRG3(3a,3b,3c)

83 — INPUT/OUTPUT I/F — 84

82 — CODEC

ANALOG SIGNAL — A/D, D/A CONVERTER

88 — MEMORY

85 — ENCRYPTION PROCESSING UNIT

89 — RECORDING MEDIA I/F

2 — RECORDING MEDIA

EP 1 523 006 A1

# FIG. 17

START PROCESSING OF
REPRODUCTION APPARATUS

ST31 — READ OUT DISC ID

ST32 — VERIFY DISC ID

DISC ID LEGITIMATE?
ST33

N → STOP REPRODUCTION OF DISC — ST34

Y

READ OUT DIRL FROM MEMORY — ST35

DISC ID EXIST IN DIRL? — ST36

N

Y → STOP REPRODUCTION OF THAT DISC — ST37

REPRODUCE CONTENT — ST38

END

EP 1 523 006 A1

# FIG. 18

```
        ( START DISC ID VERIFICATION )
                      │
                      ▼
        ┌──────────────────────────┐
  ST41  │    ACQUIRE SIGNATURE      │
        │    DATA FROM DISC ID      │
        └──────────────────────────┘
                      │
                      ▼
        ┌──────────────────────────┐
        │  GENERATE MESSAGE FROM    │
        │  SIGNATURE DATA BASED     │
  ST42  │     ON PUBLIC KEY         │
        └──────────────────────────┘
                      │
                      ▼
        ┌──────────────────────────┐
        │  COMPARE MESSAGE OF ST32  │
  ST43  │  AND MESSAGE IN DISC ID   │
        └──────────────────────────┘
                      │
                      ▼
            ╱────────────────╲              N
           ⟨     MATCH?       ⟩──────────────────┐
            ╲────────────────╱                   │
  ST44          │ Y                              │
                ▼                                ▼
        ┌──────────────────────┐      ┌──────────────────────────┐
  ST45  │ SIGNATURE IS LEGITIMATE│ ST46│ SIGNATURE IS ILLEGITIMATE │
        └──────────────────────┘      └──────────────────────────┘
                │                                │
                ▼◄───────────────────────────────┘
            (  END  )
```

# FIG. 19

```
        ┌─────────────────────────┐
        │   START PROCESSING      │
        │   FOR REPRODUCTION      │
        └─────────────────────────┘
                    │
                    ▼
        ┌─────────────────────────┐
   ST51 │      READ OUT EKB       │
        └─────────────────────────┘
                    │
                    ▼
        ┌─────────────────────────┐
   ST52 │    DERIVE CONTENT KEY    │
        └─────────────────────────┘
                    │
                    ▼
        ┌─────────────────────────┐
   ST53 │     READ OUT CONTENT    │
        └─────────────────────────┘
                    │
                    ▼
        ┌─────────────────────────┐
   ST54 │     DECODE CONTENT      │
        └─────────────────────────┘
                    │
                    ▼
        N  ╱─────────────────────╲
      ◄────┤    CONTENT END?       │
           ╲─────────────────────╱
              ST55           │ Y
                             ▼
                      ┌────────────┐
                      │    END     │
                      └────────────┘
```

# FIG. 20

START DISC ID GENERATION

ST101 — DETERMINE PARAMETERS, GENERATE PUBLIC KEY AND SECRET KEY, AND OPEN TO PUBLIC PUBLIC KEY AND PARAMETERS

ST102 — DETERMINE MESSAGE S

WITH RESPECT TO TITLE

GENERATE SIGNATURE

WITH RESPECT TO S — ST103

GIVE SETS OF S AND SIGNATURES AS DISC ID'S TO DISC PRODUCER — ST104

END

EP 1 523 006 A1

EP 1 523 006 A1

# FIG. 21

START DISC ID
VERIFICATION

ST111 — ACQUIRE SIGNATURE
DATA FROM DISC ID

ST112 — GENERATE MESSAGE S'
FROM SIGNATURE DATA
BASED ON PUBLIC KEY

ST113 — COMPARE MESSAGE S'
OF ST112 AND MESSAGE
S IN DISC ID

MATCH? — N

ST114 — Y

ST115 — DISC ID IS LEGITIMATE

ST116 — DISC ID IS ILLEGITIMATE

END

47

# FIG. 22

START PROCESSING
FOR REPRODUCTION

ST52a — GENERATE CONTENT KEY
BASED ON MESSAGE S

ST53 — READ OUT
ENCRYPTION CONTENT

ST54 — DECODE CONTENT

N — CONTENT END?

ST55

Y

END

# FIG. 23

```
        START DISC ID GENERATION ──────────────────────────┐
                    │                                        │
                    ▼                                        ▼
ST201   ∿   SELECT q1, q2              DETERMINE S     ∿ ST206
                    │                                        │
                    ▼                                        ▼
ST202   ∿   OPEN TO PUBLIC M           CALCULATE IDkey_w(w)  ∿ ST207
            (=q1*q2)                                         │
                    │                                        ▼
                    ▼                           GIVE SETS OF (p(w),
ST203   ∿   SELECT K                            IDkey(w)) AS DISC ID'S   ∿ ST208
                    │                           TO DISC PRODUCER
                    ▼                                        │
ST204   ∿   DETERMINE W                                      ▼
                    │                                       END
                    ▼
ST205   ∿   DETERMINE p(w)
```

EP 1 523 006 A1

# FIG. 24

START DISC ID
VERIFICATION

ST211 — ACQUIRE DATA p(w)
FROM DISC ID

ST212 — p(w) PRIME NUMBER? — N

Y

ST213 — DISC ID IS LEGITIMATE

ST214 — DISC ID IS ILLEGITIMATE

END

# FIG. 25

START PROCESSING
FOR REPRODUCTION

ST221 — CALCULATE S' (=IDkey$^P$ modM) BASED ON DATA p, IDkey, M

ST222 — GENERATE CONTENT KEY BASED ON S'

ST223 — READ OUT ENCRYPTION CONTENT

ST224 — DECODE CONTENT

ST225 — CONTENT END?

N

Y

END

# FIG. 26

START DISC ID GENERATION

ST301 — SELECT q1, q2

ST302 — OPEN TO PUBLIC M (=q1*q2)

ST303 — SELECT S

ST304 — DETERMINE W

ST305 — DETERMINE e(w)

ST306 — CALCULATE I(w)

ST307 — GIVE SETS OF S AND (e(w), I(w)) AS DISC ID'S TO DISC PRODUCER

END

EP 1 523 006 A1

# FIG. 27

START PROCESSING OF REPRODUCTION APPARATUS

ST311 — READ OUT DISC ID

ST312 — CALCULATE S' (=I$^e$ modM)

ST313 — READ OUT DIRL FROM MEMORY

ST314 — DISC ID EXIST IN DIRL?

N

Y → STOP REPRODUCTION OF THAT DISC — ST315

DECODE AND REPRODUCE CONTENT USING S' AS CONTENT KEY

ST316

END

## DESCRIPTION OF REFERENCES

2, 2a, 2b, 2c... disc type recording medium

12, 12a, 12b, 12c... management apparatus

13... content provider

14... disk producer

15, 15a, 15b, 15c... reproduction apparatus

21... bus

22... main memory

23... secure memory

24... input/output interface

25... recording medium interface

26... processing unit

27... controller

80... bus

81... input/output interface

82... codec

83... input/output interface

84... converter

85... encryption processing unit

86... ROM

87... controller

88... memory

89... recording medium interface

| **INTERNATIONAL SEARCH REPORT** | International application No. |
|---|---|
| | PCT/JP2004/006324 |

**A. CLASSIFICATION OF SUBJECT MATTER**
Int.Cl$^7$ G11B20/10, G11B20/12, G11B27/00, G06F12/14, H04L9/00, H04L9/32

According to International Patent Classification (IPC) or to both national classification and IPC

**B. FIELDS SEARCHED**

Minimum documentation searched (classification system followed by classification symbols)
Int.Cl$^7$ G11B20/10, G11B20/12, G11B27/00, G06F12/14, H04L9/00, H04L9/32

Documentation searched other than minimum documentation to the extent that such documents are included in the fields searched
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-132457 A (Victor Company Of Japan, Ltd.), 10 May, 2002 (10.05.02), Full text; Figs. 1 to 11 (Family: none) | 1-4,9-12, 16-19,23-26 |
| X | JP 11-212454 A (NHK Spring Co., Ltd.), 06 August, 1999 (06.08.99), Full text; Figs. 1 to 10 (Family: none) | 1-4,9-12, 6-19,23-26 |
| X | JP 11-202766 A (Canon Inc.), 30 July, 1999 (30.07.99), Full text; Figs. 1 to 5 & US 6298153 B1 | 1-4,9-12, 16-19,23-26 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 September, 2004 (02.09.04) | 21 September, 2004 (21.09.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/006324 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

    This application does not satisfy the requirement of unity of invention
because of the reason given on the extra sheet.

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-4, 9-12, 16-19, 23-26

**Remark on Protest**        ☐    The additional search fees were accompanied by the applicant's protest.

                            ☐    No protest accompanied the payment of additional search fees.

Form PCT/ISA/210 (continuation of first sheet (2)) (January 2004)

56

**INTERNATIONAL SEARCH REPORT**

International application No.

PCT/JP2004/006324

Continuation of Box No.III of continuation of first sheet(2)

The inventions of claims 1-4, 9-12, 16-19, 23-26 have "a special technical feature" relating to "assigning a plurality of signature data to a plurality of different recording media."

The inventions of claims 5-8, 13-15, 20-22, 27-31 have "a special technical feature" relating to "authentication of validity of the identification data assigned to the recording medium."

The inventions of claims 32-33 have "a special technical feature" relating to "a recording medium for recording encrypted data and recording identification data identifying the recording medium containing the content key data."

Recording predetermined identification data on a recording medium so as to prevent unauthorized copying is a known configuration. And the public key encryption method using a secret key and a public key is a known technique.
Accordingly, these inventions have only the known configurations and are not so linked as to have a special technical feature.

There is no technical relationship among those inventions involving one or more of the same or corresponding technical features. Consequently, the inventions are not so linked as to form a single general inventive concept.

Form PCT/ISA/210 (extra sheet) (January 2004)